# EUROPÄISCHE PATENTSCHRIFT

(11) **EP 2 403 758 B1**
(45) Veröffentlichungstag und Bekanntmachung des Hinweises auf die Patenterteilung: **18.02.2015**
(21) Anmeldenummer: 10710190.9
(22) Anmeldetag: 04.03.2010
(51) Int. Cl.: B64C 21/08, B64C 21/02, B64C 21/04, B64C 21/06, B64C 9/16

(54) **TRAGFLÜGEL EINES FLUGZEUGS SOWIE ANORDNUNG EINES TRAGFLÜGELS MIT EINER VORRICHTUNG ZUR STRÖMUNGSBEEINFLUSSUNG**
WING OF AN AIRCRAFT AND ASSEMBLY OF A WING COMPRISING A DEVICE FOR INFLUENCING A FLOW
AILE PORTANTE D'AVION ET CONFIGURATION D'AILE PORTANTE POURVUE D'UN DISPOSITIF POUR INFLUENCER L'ÉCOULEMENT D'AIR

(30) Priorität: 04.03.2009 US 157384 P; 04.03.2009 DE 102009011662
(43) Veröffentlichungstag der Anmeldung: 11.01.2012
(73) Patentinhaber: Airbus Operations GmbH, 21129 Hamburg (DE)
(72) Erfinder: FREY, Jürgen, 01219 Dresden (DE); GÖLLING, Burkhard, 28816 Stuhr (DE); HANSEN, Heinz, 28844 Weyhe (DE); HILDEBRAND, Veit, 01109 Dresden (DE); NEITZKE, Klaus-Peter, 28259 Bremen (DE)
(74) Vertreter: UEXKÜLL & STOLBERG
(86) Internationale Anmeldenummer: PCT/EP2010/001364
(87) Internationale Veröffentlichungsnummer: WO 2010/099967

(56) Entgegenhaltungen:
- EP-A1- 0 558 904
- WO-A1-2009/004499
- WO-A2-2007/072259
- DE-B- 1 165 419
- US-A1- 2006 027 711
- US-A1- 2007 034 746
- US-A1- 2007 051 855

## Beschreibung

Die Erfindung betrifft einen Tragflügel eines Flugzeugs, eine Anordnung eines Tragflügels mit einer Vorrichtung zur Strömungsbeeinflussung.

Aus der US 2007/003474 A1 und der US 2007/0051855 A1 ist jeweils ein Tragflügel mit einer Hochauftriebsklappe bekannt, an denen Öffnungen zum Einsaugen und Ausblasen von Luft zur Veränderung der Strömungsverhältnisse am Tragflügel angeordnet sind.

Aus dem generellen Stand der Technik bekannte Hochauftriebssysteme erzielen ihre aerodynamische Performance durch Formgebung, d.h. Wölbung des gesamten Tragflügels aufgrund geeigneter Einstellung der jeweils an dem betreffenden Hauptflügel angekoppelten Hochauftriebshilfen an der Vorder- und an der Hinterkante relativ zum diesem. Speziell bei dem Ausfahren der Hochauftriebsklappe an der Hinterkante des Hauptflügels und insbesondere bei einem Stellwinkel der Klappe für die Start- und Landekonfiguration bildet sich ein Spalt zwischen dem Hauptflügel und der Hochauftriebsklappe und/oder einer Überlappung von Hauptflügel und Klappe.

Die Einstellung der Konfigurationen erfolgt mittels einer entsprechenden Klappen-Verstellkinematik, mittels der die Hochauftriebsklappe z.B. aus der Reisestellung (Clean Configuration) in die jeweils vorgegebenen Stellpositionen oder Konfigurationen bewegt wird. Um einen zusätzlichen Auftrieb insbesondere bei relativ kleinen Anstellwinkeln des Tragflügels gegenüber der Strömung zu erzeugen, wird ein zusätzlich am hinteren Bereich des Hauptflügels angelenkter Spoiler im Zusammenwirken mit der Hochauftriebs-Klappe zur Auftriebserzeugung genutzt und ähnlich wie die Hochauftriebs-Klappe ausgeschlagen, wobei die Hinterkanten-Klappe entsprechend nachgeführt wird, so dass insgesamt eine größere Gesamt-Wölbung des Profils erreicht wird.

Aufgrund von Gewichtsbeschränkungen, zu erfüllenden Lasten- und Sicherheitsbedingungen für die Start- und Landephasen sind technische Grenzen für die Auslegung einer derartigen Kombination eines Hauptlfiügels mit einem absenkbaren Spoiler und einer in einer ausgefahrenen Stellung nachführbaren Hinterkantenklappe zu berücksichtigen. Insbesondere sind systemische Begrenzungen hinsichtlich der maximalen Verfahrbarkeit des Spoilers in Verbindung mit der Hinterkantenklappe hinzunehmen, so dass die aerodynamische Leistung eines solchen Hinterkantensystems beschränkt ist. Weiterhin besteht bei einem Gesamtflügel-Profil mit einer derart starken Wölbung ausgeführtes gewölbtes Profil die Gefahr einer Ablösung der Strömung auf der Oberseite des Spoilers und/oder der Hinterkanten-Klappe.

Weiterhin sind aus dem Stand der Technik Strömungskontroll-Maßnahmen an Hauptflügeln oder Hinterkantenklappen bekannt, z.B.:
▪ Passive Wirbelgeneratoren,
▪ Vorrichtungen zum kontinuierlichen Ausblasen in ablösungsgefährdeten Gebieten,
▪ Vorrichtungen zum Absaugen der am jeweiligen Hauptflügel oder an der jeweiligen Hinterkantenklappe zur Ablösung neigenden Strömung.

Aufgabe der Erfindung ist,einen Tragflügel mit Öffnungen zum Einsaugen und Ausblasen von Luft zur aerodynamischen Einstellung von Strömungszuständen und mit einer Strömungsförderantriebs-Vorrichtung bereitzustellen, mit dem eine energetisch effiziente Strömungssteuerung erreicht wird.

Diese Aufgabe wird mit den Merkmalen der unabhängigen Patentansprüche gelöst. Weitere Ausführungsformen sind in den auf diese jeweils rückbezogenen Unteransprüchen angegeben.

Erfindungsgemäß ist insbesondere ein Tragflügel eines Flugzeugs mit einer Oberseite und einer Unterseite vorgesehen, der aufweist: einen Hauptflügel, der eine an der Oberseite gelegene obere Oberfläche und eine an der Unterseite gelegene untere Oberfläche aufweist, die jeweils entlang der Hauptflügel-Tiefenrichtung verlaufen und die bestimmungsgemäß in Hauptströmungsrichtung umströmt werden, zumindest eine zwischen einer eingefahrenen und einer ausgefahrenen Stellung bewegbar an dem Hauptflügel angekoppelte Hochauftriebsklappe und zumindest einen drehbar am Hauptflügel angekoppelten und über die Hinterkante desselben hinausragenden Spoiler. In der ausgefahrenen Stellung der Hochauftriebsklappe befindet sich die Hinterkante des Spoilers mit einem Abstand von der Hochauftriebsklappe. Die Hochauftriebsklappe ist insbesondere drehbar gelagert. Insbesondere ist der Tragflügel derart gestaltet, dass in der ausgefahrenen Stellung der Hochauftriebsklappe diese von dem Hauptflügel unter Freilassung eines Spaltes in Hauptflügel-Tiefenrichtung beabstandet und gegenüber diesem nach unten gefahren ist, wobei bei der ausgefahrenen Stellung der Hochauftriebsklappe der Spoiler zur Optimierung der Strömung entlang des Tragflügels in Richtung zur Oberseite der Hochauftriebsklappe drehbar ist.

Der Hauptflügel weist eine Mehrzahl von Luft-Auslassöffnungen oder Luft-Ausblasöffnungen auf, von denen mehrere entlang der HauptflügelSpannweitenrichtung nebeneinander und in der Hauptflügel-Tiefenrichtung im Bereich zwischen 40 % und 90 % der Flügeltiefe des gesamten Tragflügels von der Spitze des gesamten Tragflügels aus angeordnet sein können. Alternativ dazu kann vorgesehen sein, dass mehrere der Luftauslassöffnungen entlang der Hauptflügel-Spannweitenrichtung nebeneinander und in der Hauptflügel-Tiefenrichtung im Bereich zwischen 40 % und 90 % der Flügeltiefe des Hauptflügels von der Spitze des Hauptflügels aus gesehen angeordnet sind. Bei dem Vorhandensein eines Vorflügels kann vorgesehen sein, dass die Mehrzahl von Ausblasöffnungen in der HauptflügelTiefenrichtung im Bereich zwischen 40 % und 90 % der Flügeltiefe des Tragflügels bei eingefahrenem Vorflügel und bei eingefahrener Hochauftriebsklappe von der Spitze des Gesamtflügels aus gesehen gelegen sind.

Die Luft-Auslassöffnungen stehen jeweils über eine Luftleitung in einer Strömungsverbindung mit der systemischen Auslassvorrichtung einer im Hauptflügel, hinteren Flügelkasten oder im Spoiler-Bereich angeordneten systemischen Strömungsförderantriebs-Vorrichtung in Verbindung.

Erfindungsgemäß kann weiterhin vorgesehen sein, dass der Spoiler eine Mehrzahl von Einlassöffnungen zum Einlassen von Luft aufweist, die in der SpoilerSpannweitenrichtung nebeneinander und in der Spoiler-Tiefenrichtung im Bereich zwischen 70 % und 100 % der Spoilertiefe von dem vorderen Ende des Spoilers aus gesehen auf der Ober- oder Unterseite des Spoilers angeordnet sind und die jeweils über eine Luftleitung in einer Strömungsverbindung mit der Einlassvorrichtung der Strömungsförderantriebs-Vorrichtung stehen, und dass die StrömungsförderantriebsVorrichtung eine Empfangsvorrichtung zum Empfang von Kommandosignalen zur Einstellung der Strömungsförderantriebs-Vorrichtung aufweist. Das Strömungskontrollsystem verbindet daher die Einlassöffnungen mit den Auslassöffnungen. Bei einer entsprechenden strukturellen Auslegung und der Einrichtung einer systemischen Steuerung / Regelung der Auslass- und Einlassöffnungen sind insbesondere vorgesehen: eine StrömungsförderantriebsVorrichtung, eine Komponente zur Steuerung und/oder Regelung der Strömungsförderantriebs-Vorrichtung und ein oder mehrere Sensoren als Kommandosignalgeber zur Steuerung bzw. Regelung der Strömungsförderantriebsvorrichtung und/oder zur Steuerung bzw. Regelung der Auslass- und Einlassöffnungen, z.B. zum Schließen und Öffnen und/oder zur Einstellung der Öffnungsgröße der Auslass- und Einlassöffnungen. Darüber hinaus kann das Strömungskontrollsystem mit einer Flugsteuerungsvorrichtung verbunden sein, um im Simplex- oder Duplex-Betrieb zum einen den Zustand des Strömungskontrollsystems dem Piloten oder Autopiloten mitzuteilen und/oder zum anderen zur Steuerung bzw. Regelung des Strömungskontrollsystems notwendige über den Gesamtflugzeugzustand wichtige Daten, Messgrößen oder aufbereitete Informationen kontinuierlich oder bei Bedarf zur Verfügung zu stellen. Der Bedarf kann systemseitig und/oder seitens des Piloten formuliert sein. Mit der Durchführung der erfindungsgemäßen Strömungsbeeinflussung erfolgt eine Beeinflussung der sich ablösenden Grenz- bzw. Scherschichtströmung über dem insbesondere abgesenkten Spoiler in der Konfiguration mit einer entsprechenden Hinterkantenklappe werden folgende Vorteile erzielt:
▪ eine Verbesserung der aerodynamischen Leistung des Gesamt-Hochauftriebssystems mit einem Hauptflügel, einem Spoiler und einer Hochauftriebsklappe zu höheren Auftriebsbeiwerten bei gleichem Flügelanstellwinkel, insbesondere bei kleinen Anstellwinkeln bzw. im linearen Auftriebsbeiwertsbereich; und
▪ eine Erhöhung des maximalen Auftriebes des Flügels in Hochauftriebskonfiguration mit abgesenktem Spoiler und ausgefahrener Hinterkantenklappe und/oder eine Erhöhung des maximalen Anstellwinkels des Flügels.

Nach einem Ausführungsbeispiel der Erfindung kann bei einer geeigneten Auslegung der Strömungskontrolle auf dem Spoiler und einer hinreichend großen Verbesserung der aerodynamischen Leistung zusammen mit der ausgefahrenen Hinterkantenklappe je nach Anwendungsfall auf den Vorflügel als Hochauftriebshilfe an der Vorderkante des Hauptflügels verzichtet werden oder zumindest nur noch eine minimale Auslegung eines Vorflügels notwendig sein, um nur noch eine gewisse minimal notwendige zusätzliche Differenz in der Auftriebsleistung zu erzielen, was zu Gewichtseinsparungen und zur Verringerung der Systemkomplexität und zur Verringerung an Kosten für das Gesamthochauftriebskonfiguration und dessen systemischen und strukturellen Auslegung und Integration in den Hauptflügel führen kann. Unter minimaler Auslegung eines Vorflügels wird in diesem Zusammenhang verstanden, dass der Vorflügel mit einer relativ geringen Größe ausgeführt werden kann, soweit in solcher überhaupt bei dem jeweils vorgesehenen Anwendungsfall erforderlich ist.

Durch die erfindungsgemäß erreichbar Reduzierung des Gewichts der Hochauftriebsvorrichtung kann weiterhin ein wesentlicher Beitrag zur Treibstoffersparnis für eine Gesamtflugzeugkonfiguration geleistet werden.

Erfindungsgemäß ist insbesondere vorgesehen: Tragflügel eines Flugzeugs mit einer Oberseite und einer Unterseite, aufweisend: einen Hauptflügel, der eine an der Oberseite gelegene obere Oberfläche und eine an der Unterseite gelegene untere Oberfläche aufweist, die jeweils entlang der Hauptflügel-Tiefenrichtung verlaufen und die bestimmungsgemäß in einer Strömungsrichtung umströmt werden, zumindest eine zwischen einer eingefahrenen und einer ausgefahrenen Stellung bewegbar an dem Hauptflügel angekoppelte Hochauftriebsklappe und zumindest einen drehbar am Hauptflügel angekoppelten und über die Hinterkante desselben hinausragenden Spoiler,
▪ wobei der Hauptflügel eine Mehrzahl von Ausblasöffnungen aufweist, von denen mehrere entlang der Hauptflügel-Spannweitenrichtung nebeneinander angeordnet sind und die über eine Luftleitung in einer Strömungsverbindung mit der Auslassvorrichtung einer am Hauptflügel oder am Spoiler angeordneten Strömungsförderantriebs-Vorrichtung stehen,
▪ wobei der Spoiler eine Mehrzahl von Einlassöffnungen zum Einlassen von Luft aufweist, die in der Spoiler-Spannweitenrichtung nebeneinander angeordnet sind und die jeweils über eine Luftleitung in einer Strömungsverbindung mit der Einlassvorrichtung der Strömungsförderantriebs-Vorrichtung stehen,
▪ wobei die Strömungsförderantriebs-Vorrichtung eine Empfangsvorrichtung zum Empfang von Kommandosignalen zur Einstellung der StrömungsförderantriebsVorrichtung aufweist.

Bei dem erfindungsgemäßen Tragflügel kann insbesondere vorgesehen sein, dass die Mehrzahl von Ausblasöffnungen des Hauptflügels entlang der Hauptflügel-Spannweitenrichtung nebeneinander und in der Hauptflügel-Tiefenrichtung im Bereich zwischen 40 % und 90 % der Flügeltiefe des gesamten Tragflügels bei eingefahrener Hochauftriebsklappe von der Spitze des gesamten Tragflügels aus angeordnet sind und die über eine Luftleitung in einer Strömungsverbindung mit der Auslassvorrichtung eines am Hauptflügel oder am Spoiler angeordneten StrömungsförderantriebsVorrichtung stehen.

Weiterhin kann bei dem Tragflügel vorgesehen sein, dass die Mehrzahl von Einlassöffnungen des Spoilers zum Einlassen von Luft in der Spoiler-Spannweitenrichtung nebeneinander und in der Spoiler-Tiefenrichtung im Bereich zwischen 70 % und 100 % der Spoilertiefe von dem vorderen Ende des Spoilers aus gesehen angeordnet sind.

Der Tragflügel kann einen Vorflügel aufweisen und dass die Mehrzahl von Ausblasöffnungen in der Hauptflügel-Tiefenrichtung im Bereich zwischen 40 % und 90 % der Flügeltiefe des Tragflügels bei eingefahrenem Vorflügel und bei eingefahrener Hochauftriebsklappe von der Spitze des Gesamtflügels aus gelegen sind.

An einer Stelle der Hauptflügelspannweiten-Richtung und in der HauptflügeltiefenRichtung des Hauptflügels gesehen können mehrere Ausblasöffnungen hintereinander angeordnet sein. Alternativ können in der Hauptflügelspannweiten-Richtung nebeneinander gelegene Ausblasöffnungen in der Hauptflügeltiefen-Richtung des Hauptflügels gesehen versetzt zueinander an der Oberseite des Hauptflügels angeordnet sein.

Die Ausblasöffnungen können derart angeordnet sein, dass der Winkel zwischen der Richtung der Ausmündung der Luftleitung an jeder Ausblasöffnung und der flächigen Erstreckung der oberen Oberfläche an dieser Stelle zwischen 0 Grad und 60 Grad beträgt, so dass ein in vorbestimmten Grenzen tangentiales Ausblasen von Luft durch die Ausblasöffnungen erfolgt.

Die Ausblasöffnungen am Hauptflügel können als Schlitze gebildet sein und die Länge zumindest eines Teils der Ausblasöffnungen in der Hauptflügel-Spannweitenrichtung gesehen kann zwischen 1 % und 50 % der Hauptflügeltiefe an der spannweitigen Stelle des jeweiligen Schlitzes betragen. Insbesondere kann vorgesehen sein, dass die Breite der Schlitze zwischen einem Hundertsel und einem Zehntel der Länge der Schlitze beträgt.

Nach einem weiteren Ausführungsbeispiel kann vorgesehen sein, dass die Einlassöffnungen am Spoiler als Schlitze gebildet sind und die Länge zumindest eines Teils der Einlassöffnungen in der Spoiler-Spannweitenrichtung gesehen eine Länge zwischen 1/10 und 1/4 der Spoiler-Tiefe des Spoilers an dieser Stelle beträgt. Generell kann die Breite der Schlitze am Spoiler zwischen dem 0,1- und 0,5-fachen der Länge der Schlitze betragen.

Nach einem weiteren Ausführungsbeispiel kann der Hauptflügel aufweisen: an zumindest einem Teil der Ausblasöffnungen des Hauptflügels jeweils eine Öffnungsveränderungs-Vorrichtung zum Öffnen und Schließen der jeweiligen Ausblasöffnung mit einer Öffnungsveränderungs-Mechanik und einen an diese angekoppelten Aktuator zum Betätigen der jeweiligen Öffnungsveränderungs-Mechanik. Dabei kann die Öffnungsveränderungs-Vorrichtung insbesondere einen Schieber aufweisen, der aufgrund einer Betätigung durch den Aktuator die jeweilige Ausblasöffnung teilweise oder ganz öffnet oder schließt. Weiterhin kann vorgesehen sein, dass der Aktuator aufgrund eines Ansteuerungssignals den Schieber und dadurch die Ausblasöffnung periodisch öffnet und schließt, um ein gepulstes Ausblasen der Luft durch die Ausblasöffnung zu bewirken.

Nach einem weiteren Ausführungsbeispiel ist an zumindest einem Teil der Ausblasöffnungen des Hauptflügels jeweils ein Pulsgeber-Aktuator angeordnet, der auf ein entsprechendes Eingangssignal ein gepulstes Ausblasen der Luft bewirkt. Der Pulsgeber-Aktuator kann insbesondere ein Piezoaktuator sein.

Nach der Erfindung kann vorgesehen sein, dass an zumindest einem Teil der Ausblasöffnungen des Hauptflügels jeweils eine Öffnungsveränderungs-Vorrichtung mit einem Aktuator angeordnet ist, mit der die Orientierung der jeweiligen Ausblasöffnung gegenüber der Oberfläche des Hauptflügels eingestellt werden kann.

Die Länge der drehbaren Schlitze der Öffnungsveränderungs-Vorrichtung kann zwischen 60 % und 80 % der Flügeltiefe an der spannweitigen Stelle des jeweiligen Schlitzes betragen.

Erfindungsgemäß kann vorgesehen sein, dass der Winkel für die Schrägstellung zwischen der Mittellinie der Öffnungs-Querschnittsfläche der Blende und der Hauptflügel-Spannweitenrichtung oder der Tangente an die Randlinie an der spannweitigen Stelle der Drehachse der Blende zwischen 20 Grad und 80 Grad eingestellt werden kann.

Generell kann dem Aktuator eine Ansteuerungsvorrichtung zur Erzeugung von Ansteuerungssignalen zum Steuern der Strömungsförderantriebs-Vorrichtung zugeordnet und insbesondere an diesem angeordnet sein, wobei die Ansteuerungsvorrichtung funktional mit der Strömungsförderantriebs-Vorrichtung verbunden ist und die erzeugten Ansteuerungssignale an die StrömungsförderantriebsVorrichtung sendet.

Nach einem weiteren Aspekt der Erfindung ist eine Anordnung eines Tragflügels mit einer Vorrichtung zur Strömungsbeeinflussung vorgesehen, dass der Tragflügel nach einem Ausführungsbeispiel der Erfindung gebildet ist und dass die Vorrichtung zur Strömungsbeeinflussung aufweist: eine mit einer Flugsteuerungsvorrichtung funktional in Verbindung stehende Ansteuerungsvorrichtung zur Steuerung der Leistung des Strömungsförderantriebs, wobei die Ansteuerungsvorrichtung eine Ansteuerungsfunktion aufweist, die von der Flugsteuerungsvorrichtung den Verstellzustand des Spoilers und/oder den Verstellzustand der Hochauftriebsklappe als Eingangsgröße empfängt und aufgrund der Verstellzustände jeweils ein entsprechendes Steuerungssignal zur Ansteuerung des Strömungsförderantriebs erzeugt und zur Steuerung des Durchsatzes des Strömungsförderantriebs an diesen sendet.

Bei der Anordnung eines Tragflügels mit einer Vorrichtung zur Strömungsbeeinflussung kann diese insbesondere aufweisen: eine mit einer Flugsteuerungsvorrichtung funktional in Verbindung stehende Ansteuerungsvorrichtung zur Steuerung der Öffnungsveränderungs-Vorrichtung, wobei die Ansteuerungsvorrichtung eine Ansteuerungsfunktion aufweist, die von der Flugsteuerungsvorrichtung den Verstellzustand des Spoilers und/oder den Verstellzustand der Hochauftriebsklappe als Eingangsgröße empfängt und aufgrund der Verstellzustände jeweils ein entsprechendes Steuerungssignal zur Ansteuerung der Öffnungsveränderungs-Vorrichtung erzeugt und zur Steuerung der Einstellung der Öffnungsveränderungs-Vorrichtung an diese sendet.

Nach einem weiteren Ausführungsbeispiel der Erfindung, kann dabei
▪ die Vorrichtung zur Strömungsbeeinflussung aufweisen: eine an dem Hauptflügel und/oder an dem Spoiler und/oder an der Hochauftriebsklappe angeordnete Sensorvorrichtung mit einem Sensor zur Erfassung des Strömungszustands an der Oberseite des Spoilers und/oder an der Oberseite des der Hochauftriebsklappe anliegenden oder abgelösten Strömung, die funktional mit der Ansteuerungsvorrichtung verbunden ist, und
▪ die Ansteuerungsfunktion eine Regelungsfunktion zur Regelung eines vorgegebenen Strömungswertes der Stellklappe aufweise, die funktional in Verbindung steht mit der Sensorvorrichtung zum Empfang von aktuellen Strömungswerten, mit der Stellklappen-Verstellvorrichtung zum Empfang eines Wertes für den Verstellzustand der Stellklappe und mit dem Strömungsförderantrieb und/oder Öffnungsveränderungs-Vorrichtung zur Übermittlung eines Steuersignals zur Regelung des Durchsatzes des Strömungsförderantriebs und/oder Öffnungsveränderungs-Vorrichtung.

Die Sensorvorrichtung kann insbesondere im Bereich zwischen 40 und 90 Prozent der gesamten Hauptflügeltiefe des Hauptflügels und/oder im Bereich zwischen 40 und 90 Prozent der gesamten Spoilertiefe des Spoilers und/oder im Bereich zwischen 40 und 90 Prozent der gesamten Klappentiefe der Hochauftriebsklappe gelegen sein. Der Sensor kann ein Hitzdraht-Sensor zur Erfassung des Geschwindigkeitsgradienten sein. Die Ansteuerungsfunktion kann eine Funktion zur Umrechnung des Geschwindigkeitsgradienten in eine Wandschubspannung aufweisen und die Ermittlung der Ansteuerungssignale auf der Basis der ermittelten Wandschubspannung erfolgen. Auch kann der Sensor ein Piezo-Wandschubspannungssensor zur Erfassung der Wandschubspannung sein.

Das zusätzliche Fluid oder die Luft, das bzw. die über Luftauslassöffnungen in die Umströmung des Tragflügels eingeführt wird, wird in die sich ablösende Grenzschicht- bzw. Scherschichtströmung am Tragflügel tangential eingebracht, so dass durch den Effekt des erfindungsgemäß vorgesehenen zusätzlichen Impulseintrages die drohende Ablösung verhindert wird und nachhaltig auch die Umströmung der Hinterkantenklappe für ein besseres Auftriebsverhalten zur Leistungsverbesserung des gesamten Hochauftriebsflügels genutzt wird. Zusätzlich zum kontinuierlichen und/oder gepulsten Ausblasen können auch aktiv dynamisch arbeitende Aktuatoren kombiniert mit dem kontinuierlichen und/oder gepulsten Ausblasen eingesetzt werden, die die zur Ablösung neigende Grenz- bzw. Scherschichtströmung geeignet anregen, um ein effizienteres System der Ablösekontrolle zu erhalten. Erfindungsgemäß kann auf diese Weise ein Tragflügel realisiert werden, der insbesondere einen absenkbaren Spoiler mit einem integrierten, autonom arbeitenden Strömungskontrollsystem und optional eine zusätzliche Ansteuerungsvorichtung aufweist. Mit einem periodischen/gepulsten und/oder kontinuierlichem Ausblasen im Kink-Bereich, der sich insbesondere in dem Bereich von 40% bis 90% in Tiefenrichtung der Profile des Hauptflügels befinden kann, und einem Absaugen auf der Spoileroberfläche und/oder an dessen Hinterkante, das sich insbesondere zwischen 70% (insbesondere 80%) und 100% der Profiltiefe des Spoilers auf der Ober- und/oder Unterseite befinden kann, erfolgt eine Zuführung und Komprimierung des abgesaugtes Fluids, z.B. Luft, zum Ausblasen im Kink-Bereich des Hauptflügels. Ein Strömungskontrollsystem mit der StrömungsförderantriebsVorrichtung und optional eine zusätzliche Ansteuerungsvorrichtung für die Beeinflussung des durch die Auslass- und Einlassöffnungen strömenden Luftdurchsatzes und/oder eine optional vorgesehene zusätzliche Regelungsvorrichtung zur Regelung der Strömungskontrolle, d.h. die Regelung des Volumenstroms oder eines anderen äquivalenten Maßes an den Einlass- und Auslassöffnungen, kann oder können insbesondere im Spoiler oder im Hauptflügel strukturell integriert sein.

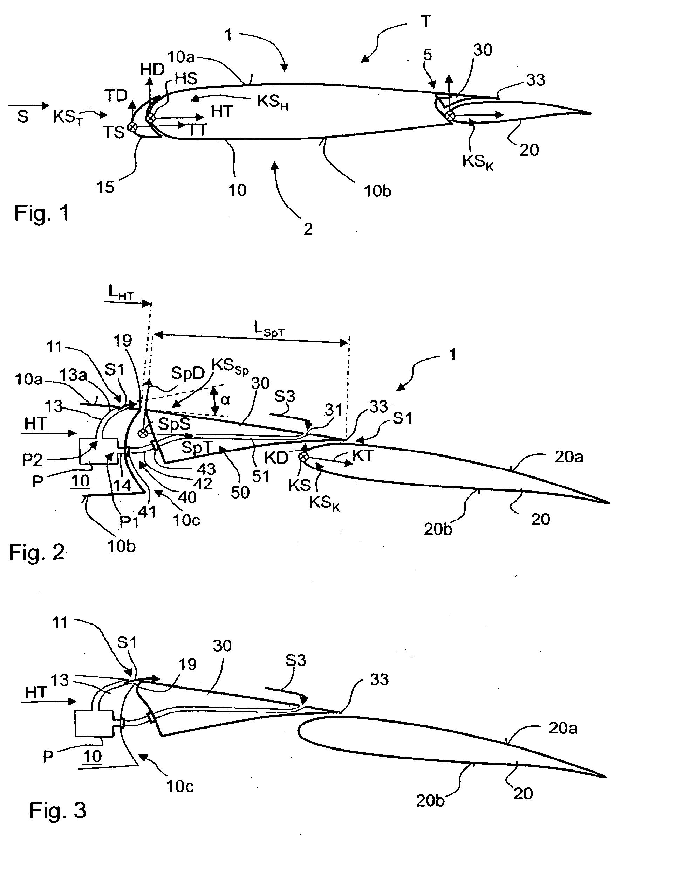

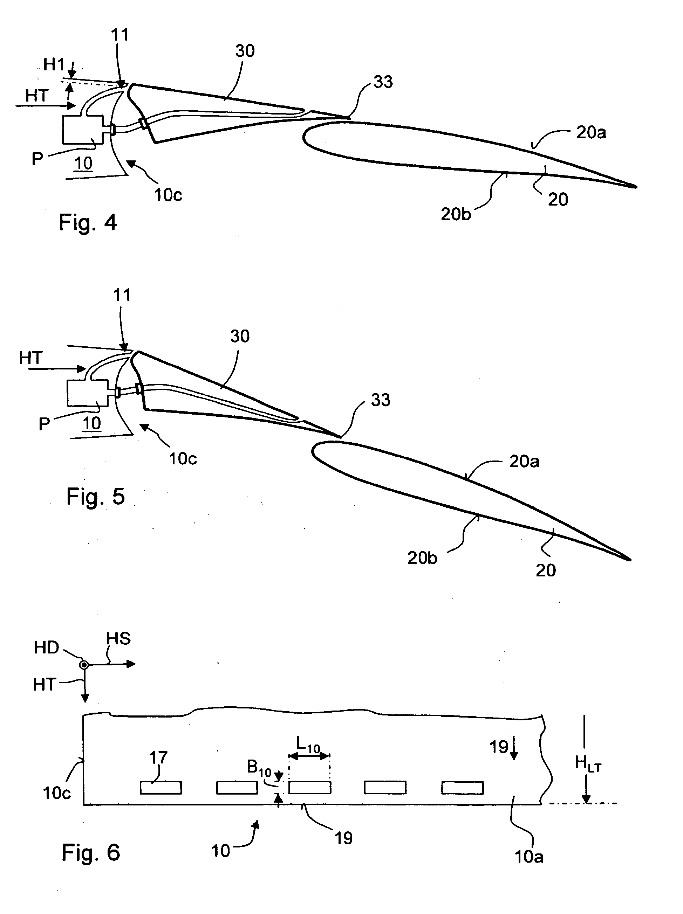

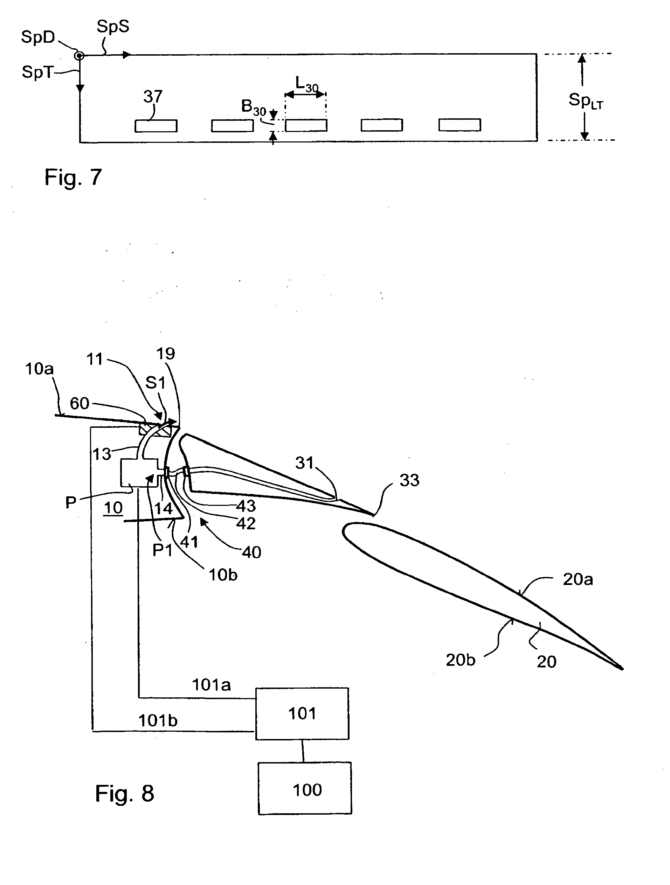

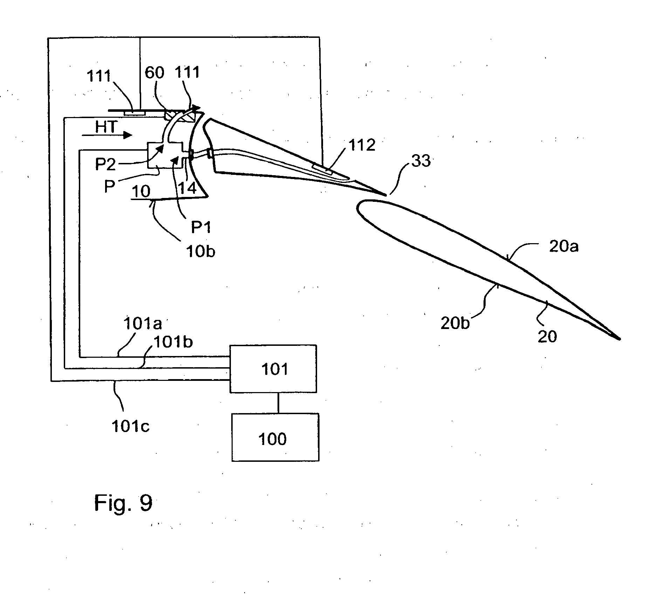

Im Folgenden werden Ausführungsbeispiele der Erfindung an Hand der beigefügten Figuren beschrieben, die zeigen:
▪ Figur 1 eine schematische Darstellung eines Gesamtflügels, für den die Erfindung anwendbar ist, mit einem Hauptflügel, in den ein Strömungsförderantrieb, einem Vorflügel, einer Hochauftriebsklappe, einem Spoiler, wobei der Hauptflügel, der Vorflügel, die Hochauftriebsklappe und der Spoiler jeweils in ihren Ausgangszuständen oder eingefahrenen Stellungen (Clean Konfiguration) gezeigt sind,
▪ Figur 2 eine ausschnittsweise Schnittdarstellung eines hinteren Bereichs eines Ausführungsbeispiels des erfindungsgemäßen Tragflügels, in dessen Hauptflügel ein Strömungsförderantrieb, eine Ausblasöffnung und eine den Strömungsförderantrieb und die Ausblasöffnung verbindende Auslassleitung integriert sind, wobei die Hochauftriebsklappe in einer ausgefahrenen Stellung und der Spoiler in einer der Hochauftriebsklappe nachgeführten und nach unten bewegten Stellung gezeigt sind und wobei die Ausblasöffnung an einer ersten Stelle an der Oberfläche des Hauptflügels angeordnet ist,
▪ Figur 3 eine ausschnittsweise Schnittdarstellung des hinteren Bereichs eines Ausführungsbeispiels des erfindungsgemäßen Tragflügels, bei dem die Ausblasöffnung an einer alternativen Stelle des Hauptflügels vorgesehen ist, wobei die Hochauftriebsklappe und der Spoiler in der in der Figur 2 gezeigten Stellung gezeigt sind,
▪ Figur 4 eine ausschnittsweise Schnittdarstellung des hinteren Bereichs eines Ausführungsbeispiels des erfindungsgemäßen Tragflügels nach der Figur 3, wobei die Hochauftriebsklappe und der Spoiler eine weiter ausgefahrene Stellung als in den in der Figur 3 gezeigten Stellungen einnehmen,
▪ Figur 5 eine ausschnittsweise Schnittdarstellung eines hinteren Bereichs eines Ausführungsbeispiels des erfindungsgemäßen Tragflügels nach der Figur 3, wobei die Hochauftriebsklappe und der Spoiler eine weiter ausgefahrene Stellung als in den in der Figur 3 gezeigten Stellungen einnehmen,
▪ Figur 6 eine schematische Draufsicht auf einen hinteren Abschnitt eines Teils eines Hauptflügels mit einer Darstellung einer Anzahl von Ausblasöffnungen,
▪ Figur 7 eine schematische Darstellung eines Spoilers als Draufsicht mit einer Anzahl von Einlassöffnungen,
▪ Figur 8 eine schematische Schnittdarstellung eines hinteren Bereichs eines Ausführungsbeispiels des erfindungsgemäßen Tragflügels mit einer schematischen Darstellung einer Ansteuerungsvorrichtung zur Ansteuerung des Strömungsförderantriebs und einer Öffnungsveränderungs-Vorrichtung zum Öffnen und Schließen von Ausblasöffnungen des Hauptflügels;
▪ Figur 9 eine schematische Schnittdarstellung eines hinteren Bereichs eines Ausführungsbeispiels des erfindungsgemäßen Tragflügels mit einer schematischen Darstellung einer Regelungsvorrichtung zur Ansteuerung des Strömungsförderantriebs und einer Öffnungsveränderungs-Vorrichtung zum Öffnen und Schließen von Ausblasöffnungen des Hauptflügels.

Die Erfindung betrifft einen Tragflügel T eines Flugzeugs mit einer Oberseite 1 und einer Unterseite 2. Das in der Figur 1 dargestellte Ausführungsbeispiel des Tragflügels T weist einen am Rumpf des Flugzeugs angebrachten Hauptflügel 10, eine an der hinteren Seite des Hauptflügels 10 gegenüber diesem bewegbar angeordnete Hochauftriebsklappe 20, einen ebenfalls an der hinteren Seite des Hauptflügels 10 gegenüber diesem bewegbar angeordneten Spoiler 30 sowie einen an der vorderen Seite des Hauptflügels 10 gegenüber diesem bewegbar angeordneten Vorflügel 15 auf. Zur weiteren Beschreibung des Tragflügels T und der erfindungsgemäßen Merkmale sowie der Ausführungsbeispiele der Erfindung ist in den Figuren
▪ ein Koordinatensystem KS_{T} für den gesamten Tragflügel T mit einer Tragflügel-Tiefenrichtung TT, einer Tragflügel-Spannweitenrichtung TS und einer Tragflügel-Dickenrichtung TD als Koordinatenachsen;
▪ ein Koordinatensystem KS_{H} für den Hauptflügel 10 mit einer Hauptflügel-Tiefenrichtung HT, einer Hauptflügel-Spannweitenrichtung HS und einer Hauptflügel-Dickenrichtung HD als Koordinatenachsen;
▪ ein Koordinatensystem KS_{Sp} für den Spoiler 30 mit einer Spoiler-Tiefenrichtung SpT, einer Spoiler-Spannweitenrichtung SpS und einer Spoiler-Dickenrichtung SpD als Koordinatenachsen; und
▪ ein Koordinatensystem KS_{H} für die Hochauftriebsklappe 20 mit einer Hochauftriebsklappen-Tiefenrichtung HT, einer Hochauftriebsklappen-Spannweitenrichtung HS und einer Hochauftriebsklappen-Dickenrichtung HD als Koordinatenachsen
eingetragen.

In der Tragflügel-Spannweitenrichtung TS des Tragflügels T gesehen können auch mehrere Hochauftriebsklappen 20, mehrere Spoiler 30 sowie mehrere Vorflügel 15 jeweils nebeneinander angeordnet sein. Der Hauptflügel 10 weist eine an der Oberseite gelegene obere Oberfläche 10a und eine an der Unterseite gelegene untere Oberfläche 10b auf, die jeweils entlang der Hauptflügel-Tiefenrichtung HT verlaufen und die bestimmungsgemäß in einer Strömungsrichtung S umströmt werden. Die Hochauftriebsklappe 20 ist zwischen einer eingefahrenen und einer ausgefahrenen Stellung bewegbar an dem Hauptflügel 10 angekoppelt. Der Spoiler 30 ist bewegbar und insbesondere drehbar am Hauptflügel 10 angekoppelt und ragt über die Hinterkante 5 desselben hinaus, wobei in der ausgefahrenen Stellung der Hochauftriebsklappe 20 diese von dem Hauptflügel 10 unter Freilassung eines Spaltes in Hauptflügel-Tiefenrichtung HT beabstandet und gegenüber diesem nach unten gefahren ist. Weiterhin ist bei der ausgefahrenen Stellung der Hochauftriebsklappe 20 der Spoiler 30 zur Optimierung der Strömung S entlang des Tragflügels in Richtung zur Oberseite 20a der Hochauftriebsklappe 20 drehbar, wenn diese ausgefahren wird oder in eine weiter ausgefahrene Stellung bewegt wird. Dabei kann insbesondere vorgesehen sein, dass bei dem Bewegen der Hochauftriebsklappe 20 von einer Ausgangsstellung in eine weiter ausgefahrene Stellung die Hochauftriebsklappe 20 in Bezug auf den Hauptflügel 10 weiter nach hinten und/oder auch weiter nach unten bewegt wird, so dass in diesem Fall insbesondere vorgesehen ist, dass die Hinterkante 39 des Spoilers 30 der dieser zugewandten Oberfläche oder Oberseite 20a der Hochauftriebsklappe 20 nachgeführt bewegt wird, so dass der Spalt S1 bzw. der Abstand zwischen der Hinterkante 39 und der Oberseite 20a der Hochauftriebsklappe 20 ein vorbestimmtes Maß einhält.

Erfindungsgemäß ist zur Erhöhung des Auftriebsbeiwertes des Tragflügels T mit einer Hochauftriebsklappe 20 vorgesehen, am Hauptflügel 10 Ausblasöffnungen 11 vorzusehen, die entlang der Hauptflügel-Spannweitenrichtung HS nebeneinander und in der Hauptflügel-Tiefenrichtung HT im Bereich zwischen 40 % (G1) und 90 % (G2) der Flügeltiefe des gesamten Tragflügels T bei eingefahrener Hochauftriebsklappe 10 von der Spitze des gesamten Tragflügels T aus angeordnet sind.

Dabei können sämtliche oder ein Teil der Ausblasöffnungen auf der Oberseite 10a des Hauptflügels 10 (Figur2), oder an dessen Hinterkante 19 (Figur 3) oder an der Hinterseite 10c (Figuren 4 und 5) des Hauptflügels 10 angeordnet sein. Zusätzlich können auch mehrere Ausblasöffnungen 11 in der Hauptprofil-Tiefenrichtung HT hintereinander angeordnet sein, so dass z.B. Ausblasöffnungen 11 matrixförmig entlang der Hinterkante 19 des Hauptflügels 10 angeordnet sein können. Auch können die Ausblasöffnungen 11 in der Hauptprofil-Tiefenrichtung HT und/oder in der Hauptflügel-Spannweitenrichtung HS gesehen versetzt zueinander angeordnet sein. Der Tragflügel T weist weiterhin eine Strömungsförderantriebs-Vorrichtung P mit einer Einlassvorrichtung P1 und einer Auslassvorrichtung P2 auf. Die Strömungsförderantriebs-Vorrichtung P kann insbesondere am Hauptflügel 10 oder am Spoiler 30 angeordnet und integriert oder eingebaut sein. Die Ausblasöffnungen 11 stehen über jeweils eine oder eine gemeinsame Luftleitung 13 in einer Strömungsverbindung mit der Auslassvorrichtung P2 der Strömungsförderantriebs-Vorrichtung P.

Bei einem Ausführungsbeispiel, bei dem der Tragflügel T einen Vorflügel 15 aufweist (Figur 1), kann alternativ die Mehrzahl von Ausblasöffnungen in der Hauptflügel-Tiefenrichtung (HT) im Bereich zwischen 40 % und 90 % der Flügeltiefe des Tragflügels T bei eingefahrenem Vorflügel 15 und bei eingefahrener Hochauftriebsklappe 10 von der Spitze des Gesamtflügels aus gelegen sein.

Die Strömungsförderantriebs-Vorrichtung P kann insbesondere durch eine Pumpe oder einen Kompressor bzw. Verdichter oder eine systemische Vorrichtung gebildet sein, die so ausgelegt ist, dass sie den notwenigen Volumenstrom von den Lufteinlassöffnungen ansaugen und den notwendigen Volumenstrom zu den Luftauslassöffnungen entsprechend des geforderten Betriebszustandes mit Steuerung oder Regelung befördern kann.

Erfindungsgemäß weist weiterhin der Spoiler 30 eine Mehrzahl von Einlassöffnungen 31 zum Einlassen von Luft auf, die in der Spoiler-Spannweitenrichtung SpS nebeneinander und in der Spoiler-Tiefenrichtung SpT im Bereich zwischen 80 % und 100 % der gesamten Spoilertiefe von dem vorderen Ende des Spoilers 30 aus gesehen auf der Ober- und/oder Unterseite angeordnet sind und die jeweils über eine Luftleitung 40, 101 in einer Strömungsverbindung mit der Einlassvorrichtung P1 der Strömungsförderantriebs-Vorrichtung P stehen.

Bei der Definition der Lage der Auslassöffnungen in Bezug auf die Flügeltiefe des Tragflügels bzw. der Lage der Einlassöffnungen in Bezug auf die Spoilertiefe kann insbesondere die Lage der Auslasssöffnungen bzw. der Einlassöffnungen der Flächenschwerpunkt der jeweiligen Ausblasöffnungen bzw. der jeweiligen Einlassöffnungen zugrunde gelegt werden.

Die Strömungsförderantriebs-Vorrichtung P weist eine Empfangsvorrichtung zum Empfang von Kommandosignalen zur Einstellung der Förderleistung der Strömungsförderantriebs-Vorrichtung P auf, um den Durchsatz der Luftströmung S1, die die Ausblasöffnungen 11 verlässt (Pfeil S1) und die in die den Tragflügel umströmenden Luft S zugeführt wird, einzustellen und zu steuern. Durch diese Aktuierung wird die am Übergang vom Hauptprofil zum Spoiler, also am Kink 19 oder dem hinteren Ende 19 der Oberseite 10a des Hauptflügels 10 zur Ablösung neigende Strömung S auf dem Spoiler 30 zum Anliegen gebracht bzw. gehalten. Das Ausblasen von Luft durch die Ausblasöffnungen 11, also durch die Aktuierung der Umströmung S wird das Umströmungsverhalten zunächst des Spoilers 30 und weiter stromab des Spoilers 30 und der Hochauftriebsklappe 20 verbessert. Insbesondere wird durch die weitere erfindungsgemäße Aktuierung der Strömung S durch Absaugen (Pfeil S3) von Luft aus der den Tragflügel T umströmenden Luft S an der Hinterkante des Spoilers 30 das Wiederanlegen und/oder Stabilisieren der Spoiler-Umströmung unterstützt. Durch systemische Kopplung des Absaugens des umströmenden Fluids im Hinterkantenbereich des Spoilers und des Ausblasens, insbesondere tangentialen Ausblasens von Fluid im "Kink"-Bereich des Übergangs vom Hauptprofil 10 zum Spoiler 30 wird für einen Tragflügel T ein integriertes Gesamtsystem zur Ablösekontrolle und damit zur Auftriebssteigerung durch Beeinflussung des Instabilitätsverhaltens der sich ablösenden Scherschichtströmung insbesondere bei gepulstem Ausblasen und durch Zirkulationskontrolle insbesondere bei kontinuierlichem Ausblasen am Kink und Einsaugen an der Hinterkante vom Spoiler geschaffen.

Das Absaugen von Fluid an der Hinterkante des abgesenkten Spoilers 30 kann insbesondere bei Start- oder Landekonfigurationen des Tragflügels T vorgesehen sein. Dadurch wird der Energiebedarf für das Ausblasen von Fluid im "Kink"-Bereich des Hochauftriebsspoilers reduziert und die aerodynamische Effizienz des Gesamtsystems verbessert.

Nach einem Ausführungsbeispiel der Erfindung ist vorgesehen, die Mehrzahl von Ausblasöffnungen 11 und eine Einlassöffnungen 31 oder eine Mehrzahl von Einlassöffnungen 31 über eine Luftleitungsvorrichtung 101 oder, insbesondere bei der spannweitigen Anwendung auf dem Hauptprofil und bei der Verwendung mehrerer Spoiler-Klappen, mehrere Luftleitungsvorrichtungen 101 miteinander zu verbinden. Die Kopplung der Mehrzahl von Ausblasöffnungen 11 und der Mehrzahl von Einlassöffnungen 31 erfolgt durch ein geeignetes System mit der in dem Spoiler 30 integrierten Luftleitungsvorrichtung 101 und der Strömungsförderantriebs-Vorrichtung P. Zur Verbindung der Luftleitungsvorrichtung 101 auf der Seite des Hauptflügels 10 mit der Einlassvorrichtung P1 der Strömungsförderantriebs-Vorrichtung P ist das an dieser Seite gelegene Ende der Luftleitungsvorrichtung 101 mit einem Anschlussstück 43 versehen. Ebenso weist der im Hauptflügel 10 von der Auslassvorrichtung P2 zur hinteren, dem Spoiler 30 zugewandten Seite 10c des Hauptflügels 10 verlaufende Leitungsabschnitt 14 an der hinteren Seite 10c ein Anschlussstück 41 auf. Eine Verbindungsleitung 42 ist mit den Anschlusstücken 41, 43 gekoppelt und verbindet somit die Luftleitungsvorrichtung 101 mit dem Leitungsabschnitt 14 und folglich die Einlassöffnung 31 oder Einlassöffnungen 31 eines Spoilers 30 oder mehrerer Spoiler 30 mit der Einlassvorrichtung P1 der Strömungsförderantriebs-Vorrichtung P. Dabei kann vorgesehen sein, dass mit einer Luftleitungsvorrichtung 101 jeweils eine Einlassöffnung 31 mit jeweils einer Einlassvorrichtung P1 der Strömungsförderantriebs-Vorrichtung P verbunden wird.

Es kann auch vorgesehen sein, dass mehrere oder sämtliche Einlassöffnungen 31 eines Spoilers 30 und/oder mehrerer entlang der Hauptflügel-Spannweitenrichtung HS nebeneinander angeordneter Spoiler 30 über eine Luftleitungsvorrichtung 101 mit jeweils einer Einlassvorrichtung P1 der Strömungsförderantriebs-Vorrichtung P verbunden wird. In diesem Fall kann die Luftleitungsvorrichtung 101 aus einer Verbindungsvorrichtung (nicht gezeigt) und einem Luftleitungskanal 51 gebildet sein, wobei mehrere Einlassöffnungen 31 eines Spoilers mittels der Verbindungsvorrichtung leitungstechnisch in einen oder mehrere Luftleitungskanäle 51 übergeführt werden. Zur Verbindung von Luftleitungskanälen 51 verschiedener Spoiler 30 mit einer Einlassvorrichtung P1 der Strömungsförderantriebs-Vorrichtung P kann insbesondere vorgesehen sein, dass der zumindest eine Luftleitungskanal 51 eines Spoilers 30 an jeweils einem Anschlussstück 43 ausmündet, dass eine Verbindungsleitung 42 jeweils ein Anschlussstück 41 mit einem Anschlussstück 41 verbindet und dass der Leitungsabschnitt 14 an der hinteren Seite 10c des Hauptflügels 10 als Verbindungsvorrichtung ausgebildet ist, die mehrere Anschlussstücke 41 mit einer oder mehreren Einlassvorrichtungen P1 der Strömungsförderantriebs-Vorrichtung P verbindet.

Mit einer entsprechend auszulegenden Leistung der Strömungsförderantriebs-Vorrichtung P und Dimensionierung der Verbindungsdruckleitungen 101, 42, 14, 13 insbesondere im Inneren des Spoilers und/oder im hinteren Flügelkastenbereich des Hauptflügels 10 kann die Bereitstellung eines geeigneten Volumenstroms und bedarfsweise soviel Volumenstrom erreicht werden. Das Gesamtsystem kann auf diese Weise energetisch effizient genutzt werden, da das notwendige zusätzliche Fluid, z.B. die notwendige Luftmenge bzw. Volumenstrom stromab, also an der Oberseite 30a des Spoilers 30 abgesaugt und stromauf in die sich ablösende Grenzschichtströmung dosiert und je nach Konfiguration in die den Tragflügel umströmende Luft S eingebracht werden kann.

Hierzu ist erfindungsgemäß eine Vorrichtung zur Strömungsbeeinflussung vorgesehen, die eine mit einer Flugsteuerungsvorrichtung 100 funktional in Verbindung stehende Ansteuerungsvorrichtung 101 zur Steuerung der Leistung des Strömungsförderantriebs P aufweist. Dabei weist die Ansteuerungsvorrichtung 101 eine Ansteuerungsfunktion auf, die von der Flugsteuerungsvorrichtung 100 den Verstellzustand des Spoilers 30 und/oder den Verstellzustand der Hochauftriebsklappe 20 als Eingangsgröße empfängt und aufgrund der Verstellzustände jeweils ein entsprechendes Steuerungssignal zur Ansteuerung des Strömungsförderantriebs P erzeugt und zur Steuerung des Durchsatzes des Strömungsförderantriebs P an diesen sendet.

Die Ausblasöffnungen 11 sind jeweils über eine Leitung 13 mit der Einlassvorrichtung P1 der Strömungsförderantriebs-Vorrichtung P verbunden. Dabei kann vorgesehen sein, dass jeweils eine Ausblasöffnung 11 mit jeweils einer Auslassvorrichtung P2 der Strömungsförderantriebs-Vorrichtung P verbunden ist. Alternativ kann vorgesehen sein, dass mehrere oder sämtliche Ausblasöffnungen 11 des Hauptflügels 10 über ein Leitungsstück 13 oder eine Verbindungsvorrichtung mit jeweils einer Auslassvorrichtung P2 der Strömungsförderantriebs-Vorrichtung P verbunden ist. Dabei können auch mehrere oder sämtliche Ausblasöffnungen 11 über eine gemeinsame Leitung 13 mit der Strömungsförderantriebs-Vorrichtung P verbunden sein. Auch können im Hauptflügel mehrere Strömungsförderantriebs-Vorrichtungen P angeordnet sein, die insbesondere in der Hauptflügel-Spannweitenrichtung HS nebeneinander gelegen sind und mit deren Einlassvorrichtungen P1 jeweils eine Mehrzahl von Ausblasöffnungen 11 in Verbindung steht.

Die Leitung 13 weist einen Endabschnitt 13a auf, dessen Ende eine Ausblasöffnung 11 ausbildet. Zur Optimierung der erfindungsgemäßen Wirkungen kann eine spezifische Richtung der Mittelachse oder Längsachse des Leitungs-Endabschnitts 13a, im Folgenden auch Richtung des Endabschnitts 13a genannt, vorgesehen sein. Dabei kann insbesondere vorgesehen sein, dass die Ausblasöffnungen 11 an dem Hauptflügel 10 derart angeordnet sind, dass der Winkel α zwischen der Richtung des Endabschnitts 13a oder der Ausmündung der Luftleitung 13 an jeder Ausblasöffnung 11 und der flächigen Erstreckung der oberen Oberfläche 10a an dieser Stelle zwischen 0 Grad und 60 Grad beträgt, so dass ein in vorbestimmten Grenzen in der aerodynamischen Wirkung tangentiales Ausblasen S1 von Luft durch die Ausblasöffnungen 11 erfolgt. In diesem Zusammenhang kann die flächige Erstreckung der oberen Oberfläche 10a insbesondere durch die Richtung der Tangente an die Oberfläche 10a des Hauptflügels 10 definiert sein, wobei hierzu die Richtung der Tangente in der Hauptflügel-Tiefenrichtung HT zugrunde zu legen ist.

Die Ausblasöffnungen 11 am Hauptflügel 10 können insbesondere schlitzförmig gebildet sein, wie dies in der Figur 6 dargestellt ist. In der Figur 6 ist ein Teil eines Hauptflügels 10 mit einer Flügeltiefe von H_{LT} und mit dem hinteren Ende 19, der Oberseite 10a des Hauptflügels 10 und einer quer zu dieser verlaufenden Seitenkante 10c dargestellt. Entlang dem hinteren Ende 19 verlaufen in der Hauptflügel-Spannweitenrichtung HS gesehen mehrere Schlitze nebeneinander, wobei die Längsrichtung derselben entlang des hinteren Endes oder Randes 19 der Oberseite 10a des Hauptflügels 10 verlaufen. Der Rand kann durch die in Hauptflügel-Tiefenrichtung HT gesehen hinterste Stelle des Hauptflügels HT definiert sein. Die Längsrichtung der Ausblasöffnungen 11 kann insbesondere durch die Mittellinie der Öffnungs-Querschnittsfläche entlang der jeweils längeren der Randlinien der jeweiligen Schlitz-Öffnung definiert sein. Die Länge L₁₀ der Schlitze 17 kann insbesondere zwischen 1% (Ein Prozent) und 50 % (Fünfzig Prozent) der Hauptflügeltiefe an der spannweitigen Stelle des jeweiligen Schlitzes betragen. Die Länge der Schlitze L10 hängt unter anderem von der möglichen strukturellen insbesondere in Spannweite tragenden Struktur des Hauptflügels hinsichtlich Festigkeits- und Materialanforderungen ab. Die Breite B₁₀ der Schlitze kann insbesondere ein Hundertstel (1/100) und ein Zehntel (1/10) der Länge L₁₀ der Schlitze betragen. Nach einem alternativen Ausführungsbeispiel können die Schlitze auch derart angeordnet sein, dass deren Längsrichtung L₁₀ längs oder unter einem Winkel schräg zwischen 0 Grad und 90 Grad der Hauptflügel-Tiefenrichtung HT verläuft.

Auch die Einlassöffnungen 31 am Spoiler 30 können insbesondere ebenfalls die Form von Schlitzen 37 haben. Nach einem Ausführungsbeispiel mit geradlinigem Verlauf oder kurvenförmigen Verlauf der Randlinien der jeweiligen Öffnungen beträgt die Länge L₃₇ in der Spoiler-Spannweitenrichtung SpS gesehen zwischen einem Zehntel (1/10) der Spoiler-Tiefe L_{SpT} und 9/10 der gesamten Spannweite der jeweiligen Spoiler-Klappe des Spoilers 30 an dieser Stelle,. Die Breite B₃₇ der Schlitze kann insbesondere ein Hundertstel (1/100) und ein Fünftel (1/5) der Länge L₃₇ der Schlitze betragen. Nach einem Ausführungsbeispiel sind die Schlitze 37 entlang der Spoiler-Spannweitenrichtung SpS nebeneinander angeordnet (Figur 7), wobei die Längsrichtung derselben entlang des hinteren Endes 39 der Oberseite 30a des Spoilers 30 verlaufen. Die Längsrichtung kann insbesondere durch die Mittellinie der Öffnungs-Querschnittsfläche entlang der jeweils längeren der Randlinien der jeweiligen Schlitz-Öffnung definiert sein. Nach einem alternativen Ausführungsbeispiel können die Schlitze 37 auch derart angeordnet sein, dass deren Längsrichtung L₃₇ längs der Spoiler-Tiefenrichtung SpT verläuft.

Die Ausblasöffnungen und/oder die Einlassöffnungen können generell als kreis- und/oder ellipsenförmige Löcher gebildet sein. Dabei können die Ausblasöffnungen 17 und/oder die Einlassöffnungen 37 auch einen runden oder ellipsenförmigen Öffnungsrand aufweisen.

Die Ausblasöffnungen und/oder die Einlassöffnungen können generell geradlinige (Figuren 6 und 7) und/oder kurvenförmige Randlinien haben. Dabei können die Ausblasöffnungen 17 und/oder die Einlassöffnungen 37 auch mit einer viereckigen oder eine andere vieleckige Form des Öffnungsrandes gebildet sein. Insbesondere können die Öffnungen eine rechteckige Form haben. Dabei können die Ecken abgerundet gestaltet sein (in den Figuren nicht gezeigt).

Zur Ansteuerung und/oder Steuerung der Strömungsförderantriebs-Vorrichtung P ist im Flugzeug die Ansteuerungsvorrichtung 101 vorgesehen, die funktional mit dem Aktuator über eine Signalleitung 101 a in Verbindung steht (Figur 8).

Nach einem erfindungsgemäßen Ausführungsbeispiel können die Ausblasöffnungen 11 oder ein Teil derselben mit einer Öffnungsveränderungs-Vorrichtung 60 (in den Figuren 8 und 9 nur schematisch dargestellt) versehen sein, mit der die Größe der jeweiligen Ausblasöffnungen 11 und/oder die Orientierung der jeweiligen Ausblasöffnungen 11 veränderbar ist und an die eine Öffnungsveränderungs-Mechanik und einen an diese angekoppelten Aktuator zum Betätigen der jeweiligen Öffnungsveränderungs-Mechanik angekoppelt ist. Zur Ansteuerung und/oder Steuerung des Aktuators der jeweiligen Öffnungsveränderungs-Vorrichtung ist im Flugzeug eine Ansteuerungsvorrichtung 101 vorgesehen, die funktional mit dem Aktuator über eine Signalleitung 101 b in Verbindung steht.

Die Öffnungsveränderungs-Vorrichtung 60 kann zur Veränderung oder Einstellung der Größe der jeweiligen Ausblasöffnungen 11 einen Schieber 51 aufweisen, der an der Oberseite 10a des Hauptflügels 10 bewegbar angeordnet ist und der aufgrund einer Betätigung durch den Aktuator die jeweilige Ausblasöffnung 11 teilweise oder ganz öffnet oder schließt. Der Schieber wird an einer Führungsvorrichtung geführt, die an einem entsprechenden Bauteil des Hauptflügels 10 angeordnet ist.

Die Kombination aus der Ansteuerungsvorrichtung und der Öffnungsveränderungs-Vorrichtung 60 oder der Schieber können insbesondere derart gestaltet sein, dass mit der Öffnungsveränderungs-Vorrichtung 60 ein gepulstes Ausblasen der Luft (Pfeil S1) durch die jeweilige Ausblasöffnung 11 bewirkt wird. Dies kann dadurch realisiert sein, dass die Öffnungsveränderungs-Vorrichtung 60 insbesondere in der Ausführung als Schieber von der Ansteuerungsvorrichtung 101 periodisch derart aktiviert wird, dass die Öffnungsveränderungs-Vorrichtung 60 oder der Schieber periodisch von einer offenen in einer geringer offenen oder geschlossenen Stellung bewegbar ist. Dadurch öffnet und schließt sich die Ausblasöffnung 11 periodisch zur Herstellung, eines gepulsten Ausblasens der Luft durch die Ausblasöffnung 11. Alternativ dazu kann die Öffnungsveränderungs-Vorrichtung 60 aus einem Pulsgeber-Aktuator gebildet sein, der auf ein entsprechendes Eingangssignal ein gepulstes Ausblasen der Luft bewirkt. Der Pulsgeber-Aktuator kann insbesondere ein Piezoaktuator sein, der auf Basis eines Kammerprinzips funktioniert und aufgrund einer entsprechenden Betätigung eine Kammer verengt oder erweitert, um den Durchsatz von Luft durch die Ausblasöffnung 11 abwechselnd zu vergrößern oder zu verkleinern. Die Verwendung des Piezoaktuators zu diesem Zweck hat den Vorteil, dass zur Herstellung eines gepulsten Ausblasens nur ein relativ geringer Energiebedarf besteht. Der Pulsgeber-Aktuator kann auch durch einen Zylinder mit einer Auslassöffnung realisiert sein, der drehbar an zumindest einer Auslassöffnung 11 derart gelagert ist, dass die Auslassöffnung des Zylinders bei einer vorbestimmten Winkelstellung des Zylinders ganz oder teilweise zur Deckung kommt mit der zumindest einen Ausblasöffnung 11. Mit dieser Ausführungsform kann insbesondere mit einer konstanten Drehgeschwindigkeit des Zylinders ein gepulstes Ausströmen der Luft (Pfeil S1) an zumindest einer Auslassöffnung 11 erreicht werden.

Alternativ oder zusätzlich kann vorgesehen sein, dass an zumindest einem Teil der Ausblasöffnungen 11 des Hauptflügels 10 jeweils eine Öffnungsveränderungs-Vorrichtung mit einem Aktuator angeordnet ist, mit der die Orientierung der jeweiligen Ausblasöffnung 11 gegenüber der Oberfläche des Hauptflügels 10 eingestellt werden kann. Dabei kann die Öffnungsveränderungs-Vorrichtung 60 insbesondere durch eine an oder unterhalb der Öffnung 11 drehbar an der Oberseite 10a des Hauptflügels 10 angeordnete Blende mit einer Öffnung (nicht dargestellt) realisiert sein. Die Drehachse der Blende ist dabei vertikal zur flächigen Erstreckung der Oberseite 10a an dieser Stelle oder der in der Hauptflügeltiefenrichtung HT verlaufenden Tangente an diese Stelle. Die Blende ist gegenüber dem Schalenteil mit der Oberseite 10a abgedichtet, um Strömungsverluste und Verwirbelungen der Umströmung des Hauptflügels zu vermeiden. Die Blendenöffnung ist zumindest in seiner Breite und/oder in seiner Fläche geringer bemessen als die Ausblasöffnungen 11, an der die Blende angeordnet ist. Weiterhin ist die Blende derart gestaltet und an dem Schalenteil mit der Oberseite 10a derart angeordnet, dass die in Längsrichtung der Blende verlaufenden Randlinien der Öffnung der Blende, die also entlang der Hauptflügel-Spannweitenrichtung HS verlaufen, zumindest in einem Drehstellungsbereich abhängig von der jeweiligen Drehstellung mehr oder weniger schräg zur Hauptflügel-Spannweitenrichtung HS verlaufen. Dadurch kann die Orientierung der jeweiligen Ausblasöffnung 11 gegenüber der Oberfläche des Hauptflügels 10 eingestellt werden. Zu diesem Zweck ist an die Blende ein Aktuator und z.B. ein Piezoaktuator angekoppelt, der wiederum zur Verstellung der Drehstellung der Blende funktional mit der Ansteuerungsvorrichtung 101 verbunden ist, die dazu Kommandos zur Einstellung der Drehstellung erzeugt und an den Aktuator senden.

Bei einem Ausführungsbeispiel hierzu kann die Blende derart gestaltet sein, dass die Länge der drehbaren Schlitze zwischen 60 % und 80 % der Hauptflügeltiefe an der Stelle der Hauptflügel-Spannweitenrichtung HS des jeweiligen Schlitzes beträgt. Dadurch wird erreicht, dass die Länge der verstellbaren Schlitze der Blende zwischen der Hälfte bis dem Vierfachen des Betrags einer Grenzschichtdicke an der Oberseite 10a an dieser Hauptflügelposition im normalen Flugbereich des Flugzeugs beträgt. Bei diesen Größen ist die Länge definiert wie im Zusammenhang mit den fest eingerichteten Schlitzen 17, 37 beschrieben, d.h. dass die Längsrichtung der Ausblasöffnungen 11 insbesondere durch die Mittellinie der Öffnungs-Querschnittsfläche entlang der jeweils längeren der Randlinien der jeweiligen Schlitz-Öffnung definiert sein kann. Die Öffnungsveränderungs-Vorrichtung 60 zur Einstellung der Orientierung der jeweiligen Ausblasöffnung kann insbesondere derart gestaltet sein, dass der Winkel für die Schrägstellung zwischen der Mittellinie der Öffnungs-Querschnittsfläche der Blende und der Hauptflügel-Spannweitenrichtung HS oder der Tangente an die Randlinie 19 an der spannweitigen Stelle der Drehachse der Blende zwischen 20 Grad und 80 Grad eingestellt werden kann.

Nach einem weiteren Aspekt der Erfindung ist eine Anordnung eines Tragflügels T mit einer Vorrichtung zur Strömungsbeeinflussung vorgesehen, die aufweist: die Ansteuerungsvorrichtung 101 zur Steuerung der Leistung des Strömungsförderantriebs P, die mit einer Stellklappen-Verstellvorrichtung funktional in Verbindung steht und die eine Ansteuerungsfunktion aufweist, um die Leistung des Strömungsförderantriebs P und/oder die Öffnungsveränderungs-Vorrichtung 60 nach einem erfindungsgemäßen Ausführungsbeispiel zu steuern oder einzustellen. Dabei sind die Ansteuerungsvorrichtung 101 und die Flugsteuerungsvorrichtung 100 derart ausgeführt, das die Ansteuerungsvorrichtung 101 von der Flugsteuerungsvorrichtung 100 den Verstellzustand des Spoilers 30 und/oder den Verstellzustand der Hochauftriebsklappe 20 als Eingangsgröße empfängt und aufgrund der Verstellzustände jeweils ein entsprechendes Steuerungssignal zur Ansteuerung des Strömungsförderantriebs P erzeugt und zur Steuerung des Durchsatzes des Strömungsförderantriebs P an diesen sendet bzw. aufgrund der Verstellzustände jeweils ein entsprechendes Steuerungssignal zur Ansteuerung der Öffnungsveränderungs-Vorrichtung 60 erzeugt und zur Steuerung der Einstellung der Öffnungsveränderungs-Vorrichtung 60 an diese sendet. Die Einstellung der Öffnungsveränderungs-Vorrichtung 60 kann insbesondere eine Öffnungs- und Schließstellung der jeweiligen Ausblasöffnung mittels einer Öffnungsveränderungs-Vorrichtung 60 und/oder die Orientierung einer bewegbaren Blende oder von Ausblasöffnungen 11 und/oder die Einstellung der Pulsrate eines Pulsgeber-Aktuators sein.

Die Ansteuerungsvorrichtung 101 kann in der Flugzsteuerungsvorrichtung funktional oder modulweise oder als von dieser separate Einheit realisiert sein. Die Ansteuerungsvorrichtung 101 kann insbesondere strukturell im Hauptflügel integriert sein.

Nach einem Ausführungsbeispiel kann also mit der Strömungsförderantriebs-Vorrichtung P eine Ansteuerungsvorrichtung 101 zur Erzeugung von Ansteuerungssignalen zum Steuern der Strömungsförderantriebs-Vorrichtung P angeordnet sein, wobei die Ansteuerungsvorrichtung 101 funktional mit der Strömungsförderantriebs-Vorrichtung P verbunden ist und die erzeugten Ansteuerungssignale an die Strömungsförderantriebs-Vorrichtung P sendet. Nach einem weiteren Ausführungsbeispiel kann mit dem Aktuator eine Ansteuerungsvorrichtung 101 zur Erzeugung von Ansteuerungssignalen zum Steuern des Aktuators der Öffnungsveränderungs-Vorrichtung angeordnet sein, wobei die Ansteuerungsvorrichtung 101 funktional mit dem Aktuator der Öffnungsveränderungs-Vorrichtung verbunden ist und die erzeugten Ansteuerungssignale an die Aktuator der Öffnungsveränderungs-Vorrichtung sendet. Bei der Ausbildung der Öffnungsveränderungs-Vorrichtung 60 als Vorrichtung zum Öffnen und Schließen der jeweiligen Ausblasöffnung 11 mit einer Öffnungsveränderungs-Mechanik und einen an diese angekoppelten Aktuator zum Betätigen der jeweiligen Öffnungsveränderungs-Mechanik kann die Ansteuerungsvorrichtung 101 eine mit dem jeweiligen Aktuator funktional in Verbindung stehende Ansteuerfunktion zur Erzeugung eines Kommandosignals zur Steuerung des Aktuators aufweisen. Die Ansteuerungsvorrichtung 101 erzeugt aus dem Verstellzustand der Hochauftriebsklappe 20 und/oder des Spoilers 30 ein entsprechendes Signal zum Öffnen und Schließen der zumindest einen Ausblasöffnung und/oder der zumindest einen Auslassöffnung und übermittelt dieses an den Aktuator.

Zu diesem Zweck kann die Ansteuerungsfunktion eine Zuordnungstabelle aufweisen, in der Verstellzustände der Hochauftriebsklappe und/oder des Spoilers und Kommandosignale zur Steuerung des Durchsatzes des Strömungsförderantriebs P und/oder der Öffnungsveränderungs-Vorrichtung 60 zugeordnet sind, wobei die Ansteuerungsfunktion auf den Empfang der Verstellzustände mittels der Zuordnungstabelle die Kommandosignale erzeugt.

Weiterhin kann bei diesen Ausführungsformen vorgesehen sein, dass die Ansteuerungsvorrichtung 101 eine Empfangsvorrichtung mit einer funktionalen Schnittstelle zu einem Flugführungssystem zum Empfang von Sollvorgaben für die Leistung des Strömungsförderantriebs P und/oder der Öffnungsveränderungs-Vorrichtung 60 und eine Ansteuerungsfunktion aufweist, die aus diesen Sollvorgaben die Kommandosignale zur Einstellung des Strömungsförderantriebs P und/oder der Öffnungsveränderungs-Vorrichtung 60 erzeugt.

Nach einem weiteren Ausführungsbeispiel der Erfindung kann die Vorrichtung zur Strömungsbeeinflussung aufweisen: eine an dem Hauptflügel 10 und/oder an dem Spoiler 30 und/oder an der Hochauftriebsklappe 20 angeordnete Sensorvorrichtung mit einem Sensor zur Erfassung des Strömungszustands an der Oberseite 30a des Spoilers 30 und/oder an der Oberseite 20a des der Hochauftriebsklappe 20 anliegenden oder abgelösten Strömung, die funktional mit der Ansteuerungsvorrichtung 101 verbunden ist. Dabei kann weiterhin vorgesehen sein, dass die Ansteuerungsfunktion eine Funktion aufweist, die den erfassten Strömungszustand bei der Ermittlung der Kommandosignale berücksichtigt. In der Figur 9 ist ein Ausführungsbeispiel mit einer an dem Hauptflügel 10 angeordneten ersten Sensorvorrichtung 111 und einer an dem Spoiler 30 angeordneten zweiten Sensorvorrichtung 112 dargestellt.

Nach einem weiteren Ausführungsbeispiel kann die Ansteuerungsfunktion eine Regelungsfunktion zur Regelung eines vorgegebenen Strömungswertes der Stellklappe aufweisen, die funktional in Verbindung steht mit der Sensorvorrichtung oder mit den Sensorvorrichtungen zum Empfang von aktuellen Strömungswerten. Dabei kann die Ansteuerungsfunktion oder die Regelungsfunktion mit der ersten Sensorvorrichtung 111 und/oder mit der zweiten Sensorvorrichtung 112 funktional verbunden sein. Weiterhin steuert die Regelungsfunktion die Strömungsförderantriebs-Vorrichtung P und/oder eine Öffnungsveränderungs-Vorrichtung 60 an den Ausblasöffnungen 11 in beschriebener Weise an, um die Strömung S im Bereich des Hinterkantenbereichs des Hauptflügels 10 und des Spoilers 30 sowie in der Folge auch an der Hochauftriebsklappe 20 in vorbestimmter Weise einzustellen. Die Einstellung der Strömung erfolgt also durch Einstellung der erfindungsgemäßen Strömungsförderantriebs-Vorrichtung P und/oder einer erfindungsgemäßen Öffnungsveränderungs-Vorrichtung 60 aufgrund der Stellkommandos der Regelungsfunktion. Dabei kann je nach Ausführungsbeispiel die Regelungsfunktion 101 mit einer oder beiden der Sensorvorrichtungen 111, 112 und mit der Strömungsförderantriebs-Vorrichtung P und/oder eine Öffnungsveränderungs-Vorrichtung 60 funktional verbunden sein. In der Figur 9 ist ein Ausführungsbeispiel dargestellt, in dem die Regelungsfunktion als Teil der Ansteuerungsfunktion 101 sowohl von der ersten also auch von der zweiten Sensorvorrichtung 111 bzw. 112 Sensor-Inputs empfängt, daraus zur Erreichung von vorgegebenen Sensor-Sollwerten Ansteuerungskommandos zur Einstellung der Strömungsförderantriebs-Vorrichtung P und/oder einer erfindungsgemäßen Öffnungsveränderungs-Vorrichtung 60 erzeugt und an diese übermittelt, um eine einzuhaltende Umströmung des Tragflügels T zu erreichen. Dabei kann vorgegeben sein, dass die auszuregelnden Sensor-Sollwerte, die für die Regelung verwendet werden, beispielsweise durch einen Funktionszusammenhang oder in Form einer Tabelle in Abhängigkeit des gewählten oder von der Flugzeugsteuerungsvorrichtung 100 eingestellten Verstellzustands des Spoilers und/oder der Hochauftriebsklappe 20 vorgegeben und ermittelt werden. Bei der Ermittlung der auszuregelnden Sensor-Sollwerte können weitere Parameter, die in der Flugzeugsteuerungsvorrichtung 100 ermittelt und an die Ansteuerungsvorrichtung übermittelt werden, wie z.B. die Geschwindigkeit des Flugzeugs gegenüber der Luft oder der dynamische Druck und/oder die Temperatur der Luft in der Funktion bzw. der Tabelle berücksichtigt sein.

Durch die Regelung wird eine Effizienzsteigerung in der aerodynamischen Leistung erzielt. Die Regelung kann als Inputgröße des Auftriebsbeiwerts, eine bestimmte Messgröße zur Beschreibung des Strömungszustandes auf dem Spoiler und/oder der Hinterkantenklappe und/oder der aerodynamischen Leistung der Hochauftriebskonfiguration benutzt werden. Als Outputgröße der Regelung kann der Volumenstrom an den Einlass- und Auslassöffnungen und/oder Vorrichtungen benutzt werden.

Die in einem Ausführungsbeispiel jeweils verwendete Sensorvorrichtung 111, 112 weist jeweils einen Sensor zur Erfassung des Strömungszustands an der Oberseite 30a des Spoilers 30 und/oder an der Oberseite 20a des der Hochauftriebsklappe 20 anliegenden oder abgelösten Strömung auf. Die Sensoren sind funktional mit der Ansteuerungsvorrichtung 101 verbunden (Leitungen 101c). Ein Sensor kann dabei insbesondere im Bereich zwischen 40 und 100% der gesamten Hauptflügeltiefe L_{HT} des Hauptflügels 10 im Bereich zwischen 40 und 100% der gesamten Spoiler-Tiefe L_{SpT} des Spoilers 30 gelegen sein. Alternativ oder zusätzlich kann ein Sensor im Bereich zwischen 40 und 100% der gesamten Hochauftriebsklappen-Tiefe der Hochauftriebsklappe 20 gelegen sein.

Bei einer dieser Sensorkonfigurationen mit einer funktionalen Verbindung zur Ansteuerungsvorrichtung 101 kann die Ansteuerungsvorrichtung 101 funktional mit einer Öffnungsveränderungs-Vorrichtung 600 und/oder einer Strömungsförderantriebs-Vorrichtung P funktional verbunden sein. In der in der Figur 9 dargestellten Ausführungsform der Erfindung ist der Ansteuerungsvorrichtung 101 funktional mit einer ersten und einer zweiten Sensorvorrichtung 11, 112 und sowohl mit einer Öffnungsveränderungs-Vorrichtung 60als auch mit einer Strömungsförderantriebs-Vorrichtung P verbunden, um einen Regelkreis in beschriebener Weise zu realisieren.

Der jeweils aufzubringende Massen- oder Volumenstrom für das Ausblasen auf dem Hauptprofil 10 im "Kink"-Bereich und das Absaugen im Hinterkantenbereich des Spoilers 30 ist also entweder durch Erfassung der Flugzustandes des Flugzeugs mit klassischen Sensoren zur Flugzeugsteuerung, durch Erfassung des Strömungszustandes auf dem Spoiler und/oder Hinterkantenklappe durch Sensoren vorgegeben oder erfolgt durch aktiv-dynamische Steuerung mit Regelung, wobei hierfür ebenfalls Inputsignale aus der Flugzeugsteuerung und/oder Inputsignale von den Sensoren auf dem Spoiler und/oder Hinterkantenklappe angezeigt/notwendig sind. Die Regelung kann über einen geschlossenen Regelkreis oder auch durch einen wissensbasierten Ansatz (z.B. ein kalibriertes System mit Datenspeicher) umgesetzt werden, so dass eine autonome Arbeitsweise sichergestellt ist. Lediglich eine elektrische oder anders geartete Versorgung eines Luft komprimierenden und transportierenden Systems zwischen Absaugung an der Hinterkante/Hinterkantenbereich des Spoilers 30 und Ausblasen im "Kink"-Bereich des Hauptprofils 10 ist nötig.

## Patentansprüche

1. Tragflügel (T) eines Flugzeugs mit einer Oberseite (1) und einer Unterseite (2), aufweisend: einen Hauptflügel (10), der eine an der Oberseite gelegene obere Oberfläche (10a) und eine an der Unterseite gelegene untere Oberfläche (10b) aufweist, die jeweils entlang der Hauptflügel-Tiefenrichtung (HT) verlaufen, zumindest eine zwischen einer eingefahrenen und einer ausgefahrenen Stellung bewegbar an dem Hauptflügel (10) angekoppelte Hochauftriebsklappe (20) und zumindest einen drehbar am Hauptflügel (10) angekoppelten und über die Hinterkante (5) desselben hinausragenden Spoiler (30), **dadurch gekennzeichnet,**
▪ **dass** der Hauptflügel (10) eine Mehrzahl von Ausblasöffnungen (11) aufweist, von denen mehrere entlang der Hauptflügel-Spannweitenrichtung (HS) nebeneinander angeordnet sind und die über eine Luftleitung (13) in einer Strömungsverbindung mit der Auslassvorrichtung (P2) einer am Hauptflügel (10) oder am Spoiler (30) angeordneten Strömungsförderantriebs-Vorrichtung (P) stehen,
▪ **dass** der Spoiler (30) eine Mehrzahl von Einlassöffnungen (31) zum Einlassen von Luft aufweist, die in der Spoiler-Spannweitenrichtung (SpS) nebeneinander angeordnet sind und die jeweils über eine Luftleitung (40, 50) in einer Strömungsverbindung mit der Einlassvorrichtung (P1) der Strömungsförderantriebs-Vorrichtung (P) stehen,
▪ **dass** die Strömungsförderantriebs-Vorrichtung (P) eine Empfangsvorrichtung zum Empfang von Kommandosignalen zur Einstellung der Strömungsförderantriebs-Vorrichtung (P) derart aufweist, dass den Tragflügel (T) umströmende Luft durch die Einlassöffnungen (31) eingesaugt und Luft durch die Ausblasöffnungen (11) am Hauptflügel (10) ausgeblasen wird.

2. Tragflügel (T) nach dem Anspruch 1, **dadurch gekennzeichnet, dass** die Mehrzahl von Ausblasöffnungen (11) des Hauptflügels (10) entlang der Hauptflügel-Spannweitenrichtung (HS) nebeneinander und in der Hauptflügel-Tiefenrichtung (HT) im Bereich zwischen 40 % und 90 % der Flügeltiefe des gesamten Tragflügels (T) bei eingefahrener Hochauftriebsklappe (10) von der Spitze des gesamten Tragflügels (T) aus angeordnet sind und die über eine Luftleitung (13) in einer Strömungsverbindung mit der Auslassvorrichtung (P2) eines am Hauptflügel (10) oder am Spoiler (30) angeordneten Strömungsförderantriebs-Vorrichtung (P) stehen.

3. Tragflügel (T) nach dem Anspruch 1 oder 2, **dadurch gekennzeichnet, dass** die Mehrzahl von Einlassöffnungen (31) des Spoilers (30) zum Einlassen von Luft in der Spoiler-Spannweitenrichtung (SpS) nebeneinander und in der Spoiler-Tiefenrichtung (SpT) im Bereich zwischen 70 % und 100 % der Spoilertiefe von dem vorderen Ende des Spoilers (30) aus gesehen angeordnet sind.

4. Tragflügel (T) nach einem der vorstehenden Ansprüche, **dadurch gekennzeichnet, dass** der Tragflügel einen Vorflügel (15) aufweist und dass die Mehrzahl von Ausblasöffnungen in der Hauptflügel-Tiefenrichtung (HT) im Bereich zwischen 40 % und 90 % der Flügeltiefe des Tragflügels bei eingefahrenem Vorflügel (15) und bei eingefahrener Hochauftriebsklappe (10) von der Spitze des Gesamtflügels aus gelegen sind.

5. Tragflügel (T) nach einem der vorstehenden Ansprüche, **dadurch gekennzeichnet, dass** die Ausblasöffnungen (11) am Hauptflügel (10) als Schlitze (17) gebildet sind und die Länge (L₁₀) zumindest eines Teils der Ausblasöffnungen in der Hauptflügel-Spannweitenrichtung (HS) gesehen zwischen 1 % und 50 % der Hauptflügeltiefe (H_{LT}) an der spannweitigen Stelle des jeweiligen Schlitzes beträgt.

6. Tragflügel (T) nach einem der vorstehenden Ansprüche, **dadurch gekennzeichnet, dass** die Einlassöffnungen (31) am Spoiler (30) als Schlitze (37) gebildet sind und die Länge (L₃₇) zumindest eines Teils der Einlassöffnungen in der Spoiler-Spannweitenrichtung (SpS) gesehen eine Länge zwischen 1/10 und 1/4 der Spoiler-Tiefe (Sp_{LT}) des Spoilers (30) an dieser Stelle beträgt.

7. Tragflügel (T) nach einem der vorstehenden Ansprüche, **dadurch gekennzeichnet, dass** an zumindest einem Teil der Ausblasöffnungen (11) des Hauptflügels (10) jeweils eine Öffnungsveränderungs-Vorrichtung (60) mit einem Aktuator angeordnet ist, mit der die Orientierung der jeweiligen Ausblasöffnung (11) gegenüber der Oberfläche des Hauptflügels (10) eingestellt werden kann.

8. Anordnung eines Tragflügels (T) mit einer Vorrichtung zur Strömungsbeeinflussung, **dadurch gekennzeichnet, dass** der Tragflügel (T) nach einem der vorstehenden Ansprüche gebildet ist und dass die Vorrichtung zur Strömungsbeeinflussung aufweist: eine mit einer Flugsteuerungsvorrichtung (100) funktional in Verbindung stehende Ansteuerungsvorrichtung (101) zur Steuerung der Leistung des Strömungsförderantriebs (P), wobei die Ansteuerungsvorrichtung (101) eine Ansteuerungsfunktion aufweist, die von der Flugsteuerungsvorrichtung (100) den Verstellzustand des Spoilers (30) und/oder den Verstellzustand der Hochauftriebsklappe (20) als Eingangsgröße empfängt und aufgrund der Verstellzustände jeweils ein entsprechendes Steuerungssignal zur Ansteuerung des Strömungsförderantriebs (P) oder der Öffnungsveränderungs-Vorrichtung (60) erzeugt und zur Steuerung des Durchsatzes des Strömungsförderantriebs (P) an diesen oder zur Steuerung der Einstellung der Öffnungsveränderungs-Vorrichtung (60) an diese sendet.

9. Anordnung eines Tragflügels (T) mit einer Vorrichtung zur Strömungsbeeinflussung nach dem Anspruch 8, **dadurch gekennzeichnet,**
▪ **dass** die Vorrichtung zur Strömungsbeeinflussung aufweist: eine an dem Hauptflügel und/oder an dem Spoiler und/oder an der Hochauftriebsklappe angeordnete Sensorvorrichtung mit einem Sensor zur Erfassung des Strömungszustands an der Oberseite (30a) des Spoilers (30) und/oder an der Oberseite (20a) des der Hochauftriebsklappe (20) anliegenden oder abgelösten Strömung, die funktional mit der Ansteuerungsvorrichtung (101) verbunden ist, und
▪ **dass** die Ansteuerungsfunktion eine Regelungsfunktion zur Regelung eines vorgegebenen Strömungswertes der Stellklappe aufweist, die funktional in Verbindung steht mit der Sensorvorrichtung zum Empfang von aktuellen Strömungswerten, mit der Stellklappen-Verstellvorrichtung zum Empfang eines Wertes für den Verstellzustand der Stellklappe und mit dem Strömungsförderantrieb (P) und/oder Öffnungsveränderungs-Vorrichtung (60) zur Übermittlung eines Steuersignals zur Regelung des Durchsatzes des Strömungsförderantriebs (P) und/oder Öffnungsveränderungs-Vorrichtung (60).

10. Anordnung eines Tragflügels (T) mit einer Vorrichtung zur Strömungsbeeinflussung nach dem Anspruch 9, **dadurch gekennzeichnet, dass** die Sensorvorrichtung im Bereich zwischen 40 und 90 Prozent der gesamten Hauptflügeltiefe des Hauptflügels (10) und/oder im Bereich zwischen 40 und 90 Prozent der gesamten Spoilertiefe des Spoilers (30) und/oder im Bereich zwischen 40 und 90 Prozent der gesamten Klappentiefe der Hochauftriebsklappe gelegen ist.

11. Anordnung eines Tragflügels (T) mit einer Vorrichtung zur Strömungsbeeinflussung nach dem Anspruch 9 oder 10, **dadurch gekennzeichnet, dass** der Sensor ein Hitzdraht-Sensor zur Erfassung des Geschwindigkeitsgradienten ist und dass die Ansteuerungsfunktion eine Funktion zur Umrechnung des Geschwindigkeitsgradienten in eine Wandschubspannung aufweist und die Ermittlung der Ansteuerungssignale auf der Basis der ermittelten Wandschubspannung erfolgt.

12. Anordnung eines Tragflügels (T) mit einer Vorrichtung zur Strömungsbeeinflussung nach einem der Ansprüche 9 bis 11, **dadurch gekennzeichnet, dass** der Sensor ein Piezo-Wandschubspannungssensor zur Erfassung der Wandschubspannung ist.

## Claims

1. A wing (T) of an aircraft with an upper side (1) and a lower side (2), comprising: a main wing (10), which has an upper surface (10a) positioned on the upper side, and a lower surface (10b) positioned on the lower side, which surfaces in each case run along the main wing chordwise direction (HT), at least one high lift flap (20) coupled to the main wing (10) such that it can move between a retracted and an extended setting, and at least one spoiler (30) coupled to the main wing (10) such that it can rotate and projecting beyond the trailing edge (5) of the same, **characterized in that**:
• the main wing (10) has a plurality of ejection openings (11), of which a plurality are arranged side-by-side along the main wing spanwise direction (HS), and which are connected in terms of flow via an air conduit (13) with the outlet device (P2) of a flow delivery driver device (P) arranged on the main wing (10) or on the spoiler (30),
• the spoiler (30) has a plurality of inlet openings (31) for the intake of air, which are arranged side-by-side in the spoiler span-wise direction (SpS), and which in each case are connected in terms of flow via an air conduit (40, 50) with the inlet device (P1) of the flow delivery driver device (P),
• the flow delivery driver device (P) has a receiver device for the reception of command signals for purposes of adjustment of the flow delivery driver device (P), in such a manner that air flowing around the wing (T) is sucked into the inlet openings (31) and air is ejected through the ejection openings (11) at the main wing (10).

2. The wing (T) in accordance with claim 1, **characterized in that** the plurality of ejection openings (11) of the main wing (10) are arranged side-by-side along the main wing spanwise direction (HS), and in the main wing chordwise direction (HT) are arranged, when the high lift flap (10) is retracted, in the region between 40% and 90% of the wing chord of the total wing (T) starting from the tip of the total wing (T), and which are connected in terms of flow via an air conduit (13) with the outlet device (P2) of a flow delivery driver device (P) arranged on the main wing (10), or on the spoiler (30).

3. The wing (T) in accordance with claim 1 or 2, **characterized in that** the plurality of inlet openings (31) of the spoiler (30) for the intake of air are arranged side-by-side in the spoiler spanwise direction (SpS) and in the spoiler chordwise direction (SpT) are arranged in the region between 70% and 100% of the spoiler chord as seen from the front end of the spoiler (30).

4. The wing (T) according to any of the preceding claims, **characterized in that** the wing has a leading edge slat (15) and **in that** the plurality of ejection openings are positioned from the tip of the total wing in the main wing chordwise direction (HT) in the region between 40% and 90% of the wing chord of the wing, with the leading edge slat (15) retracted, and with the high lift flap (10) retracted.

5. The wing (T) according to any of the preceding claims, **characterized in that** the ejection openings (11) on the main wing (10) are designed as slots (17) and the length (L₁₀) of at least a fraction of the ejection openings as seen in the main wing spanwise direction (HS) is between 1% and 50% of the main wing chord (H_{LT}) at the spanwise location of the respective slot.

6. The wing (T) according to any of the preceding claims, **characterized in that** the inlet openings (31) on the spoiler (30) are designed as slots (37) and the length (L₃₇) of at least a fraction of the inlet openings as seen in the spoiler spanwise direction (SpS) is a length between 1/10 and 1/4 of the spoiler chord (SP_{LT}) of the spoiler (30) at this location.

7. The wing (T) according to any of the preceding claims, **characterized in that** at least a fraction of the ejection openings (11) of the main wing (10) in each case is arranged an opening alteration device (60) with an actuator, with which the orientation of the respective ejection opening (11) relative to the surface of the main wing (10) can be adjusted.

8. An arrangement of a wing (T) with a device for purposes of flow control, **characterized in that** the wing (T) is formed according to any of the preceding claims, and that the device for purposes of flow control has: a driver device (101) functionally connected with a flight control device (100) for controlling the performance of the flow delivery drive (P), wherein the driver device (101) has a driver function, which receives from the flight control device (100) the setting status of the spoiler (30) and/or the setting status of the high lift flap (20) as an input parameter, and on the basis of the setting statuses in each case generates a corresponding control signal for driving the flow delivery drive (P) or the opening alteration device (60) and transmits it thereto for controlling the through flow of the flow delivery device (P) and for controlling the adjustment of the opening alteration device (60), respectively.

9. The arrangement of a wing (T) with a device for purposes of flow control in accordance with claim 8, **characterized in that**
• the device for purposes of flow control has: a sensor device arranged on the main wing and/or on the spoiler and/or on the high lift flap and having a sensor for purposes of detecting the flow status of the flow attached to or separated from the upper side (30a) of the spoiler (30) and/or the upper side (20a) of the high lift flap (20), which sensor device is functionally connected with the driver device (101), and
• the driver function has a control function for purposes of controlling a prescribed flow parameter of the adjustable flap, which is functionally connected with the sensor device for purposes of receiving current flow parameters, with the adjustable flap positioning device for purposes of receiving a parameter for the setting status of the adjustable flap, and with the flow delivery drive (P) and/or opening alteration device (60) for purposes of transmitting a control signal for purposes of control of the through flow of the flow delivery drive (P) and/or opening alteration device (60).

10. The arrangement of a wing (T) with a device for purpose of flow control in accordance with claim 9, **characterized in that** the sensor device is positioned in the region between 40 and 90 percent of the total main wing chord of the main wing (10) and/or in the region between 40 and 90 percent of the total spoiler chord of the spoiler (30) and/or in the region between 40 and 90 percent of the total flap chord of the high lift flap.

11. The arrangement of a wing (T) with a device for purpose of flow control in accordance with claim 9 or 10, **characterized in that** the sensor is a hot wire sensor for purposes of detecting the velocity gradient, and **in that** the driver function has a function for purposes of converting the velocity gradient into a wall shear stress, and the determination of the control signals takes place on the basis of the determined wall shear stress.

12. The arrangement of a wing (T) with a device for purpose of flow control according to one of claims 9 to 11, **characterized in that** the sensor is a piezo wall shear stress sensor for purposes of detecting the wall shear stress.

## Revendications

1. Aile (T) d'un avion avec une face supérieure (1) et une face inférieure (2), comportant une aile principale (10) qui comporte un extrados (10a), situé sur la face supérieure, et un intrados (10b), situé sur la face inférieure, qui s'étendent chacun le long du sens de profondeur de l'aile principale (HT), au moins un volet hypersustentateur (20) couplé à l'aile principale (10) de manière mobile entre une position escamotée et une position extraite, et au moins un spoiler (30), couplé de manière rotative à l'aile principale (10) et s'avançant au-delà du bord arrière (5) de celle-ci, **caractérisée**
- **en ce que** l'aile principale (10) comporte une pluralité d'orifices de soufflage (11), dont plusieurs sont disposés les uns à côté des autres le long du sens d'envergure de l'aile principale (HS) et qui, par l'intermédiaire d'une conduite d'air (13), sont en liaison fluidique avec le dispositif de sortie (P2) d'un dispositif de commande favorisant l'écoulement (P), disposé sur l'aile principale (10) ou sur le spoiler (30),
- **en ce que** le spoiler (30) comporte une pluralité d'orifices d'admission (31) pour l'admission de l'air, lesquels sont disposés les uns à côté des autres le long du sens d'envergure du spoiler (SpS) et qui, par l'intermédiaire d'une conduite d'air (40, 50), sont en liaison fluidique avec le dispositif d'admission (P1) du dispositif de commande favorisant l'écoulement (P),
- **en ce que** le dispositif de commande favorisant l'écoulement (P) comporte un dispositif de réception pour la réception de signaux de commande pour le réglage du dispositif de commande favorisant l'écoulement (P), de telle sorte que l'air circulant autour de l'aile (T) est aspiré à travers les orifices d'admission (31) et l'air est expulsé à travers les orifices de soufflage (11) sur l'aile principale (10).

2. Aile (T) selon la revendication 1, **caractérisée en ce que** la pluralité d'orifices de soufflage (11) de l'aile principale (10) sont disposés le long du sens d'envergure de l'aile principale (HS) les uns à côté des autres et à partir de la pointe de l'aile (T) dans le sens de profondeur de l'aile principale (HT) dans une plage entre 40 % et 90 % de la profondeur de l'aile (T) totale lorsque le volet hypersustentateur (20) est en position escamotée, en partant de la pointe de l'aile (T) totale et, par l'intermédiaire d'une conduite d'air (13), sont en liaison fluidique avec le dispositif de sortie (P2) d'un dispositif de commande favorisant l'écoulement (P), disposé sur l'aile principale (10) ou sur le spoiler (30).

3. Aile (T) selon les revendications 1 ou 2, **caractérisée en ce que** la pluralité d'orifices d'admission (31) du spoiler (30) pour l'admission de l'air sont disposés dans le sens d'envergure du spoiler (SpS) les uns à côté des autres et, considérés depuis l'extrémité avant du spoiler (30), dans le sens de profondeur du spoiler (SpT) dans une plage entre 70 % et 100 % de la profondeur du spoiler.

4. Aile (T) selon l'une quelconque des revendications précédentes, **caractérisée en ce que** l'aile comporte un bec de bord d'attaque (15) et **en ce que** la pluralité des orifices de soufflage, considérés depuis la pointe de l'aile totale, sont disposés dans le sens de profondeur de l'aile principale (HT) dans une plage située entre 40 % et 90 % de la profondeur de l'aile lorsque le bec de bord d'attaque (15) est escamoté et lorsque le volet hypersustentateur (20) est escamoté.

5. Aile (T) selon l'une quelconque des revendications précédentes, **caractérisée en ce que** les orifices de soufflage (11) sur l'aile principale (10) sont réalisés sous forme de fentes (17) et **en ce que** la longueur (L₁₀) d'au moins une partie des orifices de soufflage considérés dans le sens d'envergure de l'aile principale (HS) mesure entre 1 % et 50 % de la profondeur (H_{LT}) de l'aile principale à l'emplacement de la fente respective dans le sens d'envergure.

6. Aile (T) selon l'une quelconque des revendications précédentes, **caractérisée en ce que** les orifices d'admission (31) sur le spoiler (30) sont réalisés sous forme de fentes (37) et **en ce que** la longueur (L₃₇) d'au moins une partie des orifices d'admission considérés dans le sens d'envergure du spoiler (SpS) a une longueur entre 1/10 et 1/4 de la profondeur (Sp_{LT}) du spoiler (30) à cet emplacement.

7. Aile (T) selon l'une quelconque des revendications précédentes, **caractérisée en ce qu'**au niveau d'au moins une partie des orifices de soufflage (11) de l'aile principale (10) est disposé respectivement un dispositif de variation d'ouverture (60) muni d'un actionneur, qui permet de régler l'orientation de chaque orifice de soufflage (11) par rapport à la surface de l'aile principale (10).

8. Agencement d'une aile (T) avec un dispositif destiné à influencer l'écoulement, **caractérisé en ce que** l'aile (T) est réalisée selon l'une quelconque des revendications précédentes et **en ce que** le dispositif destiné à influencer l'écoulement comporte : un dispositif de commande (101), en liaison fonctionnelle avec un dispositif de commande de vol (100) et destiné à commander la puissance du dispositif de commande favorisant l'écoulement (P), le dispositif de commande (101) comportant une fonction de commande qui reçoit du dispositif de commande de vol (100) la position de réglage du spoiler (30) et/ou la position de réglage du volet hypersustentateur (20) sous forme de grandeur d'entrée et, compte tenu des positions de réglage, génère respectivement un signal de commande correspondant pour commander le dispositif de commande favorisant l'écoulement (P) ou le dispositif de variation d'ouverture (60) et l'envoie vers le dispositif de commande favorisant l'écoulement (P) pour commander le débit de celui-ci ou vers le dispositif de variation d'ouverture (60) pour commander le réglage de celui-ci.

9. Agencement d'une aile (T) avec un dispositif destiné à influencer l'écoulement selon la revendication 8, **caractérisé**
- **en ce que** le dispositif destiné à influencer l'écoulement comporte : un dispositif de détection, qui est disposé sur l'aile principale et/ou sur le spoiler et/ou sur le volet hypersustentateur et qui est muni d'un capteur pour détecter l'état d'écoulement sur l'extrados (30a) du spoiler (30) et/ou sur la face supérieure (20a) des filets d'air qui sont en contact avec le volet hypersustentateur (20) ou sont décollés de celui-ci et qui sont en liaison fonctionnelle avec le dispositif de commande (101), et
- **en ce que** la fonction de commande comporte une fonction de réglage pour régler une valeur d'écoulement prédéfinie du volet de réglage, qui est en liaison fonctionnelle avec le dispositif de détection pour recevoir les valeurs d'écoulement actuelles, avec le dispositif de réglage des volets de réglage pour recevoir une valeur pour la position de réglage du volet de réglage et avec le dispositif de commande favorisant l'écoulement (P) et/ou le dispositif de variation d'ouverture (60) pour transmettre un signal de commande en vue du réglage du débit du dispositif de commande favorisant l'écoulement (P) et/ou du dispositif de variation d'ouverture (60).

10. Agencement d'une aile (T) avec un dispositif destiné à influencer l'écoulement selon la revendication 9, **caractérisé en ce que** le dispositif de détection est situé dans une plage entre 40 et 90 pour cent de la profondeur totale de l'aile principale (10) et/ou dans une plage entre 40 et 90 pour cent de la profondeur totale du spoiler (30) et/ou dans une plage entre 40 et 90 pour cent de la profondeur totale du volet hypersustentateur.

11. Agencement d'une aile (T) avec un dispositif destiné à influencer l'écoulement selon la revendication 9 ou 10, **caractérisé en ce que** le capteur est un capteur à fil thermique destiné à détecter le gradient de vitesse et **en ce que** la fonction de commande comporte une fonction pour convertir le gradient de vitesse en une contrainte de cisaillement, et les signaux de commande sont déterminés sur la base de contrainte de cisaillement calculée.

12. Agencement d'une aile (T) avec un dispositif destiné à influencer l'écoulement selon l'une quelconque des revendications 9 à 11, **caractérisé en ce que** le capteur est un capteur piézoélectrique destiné à détecter la tension de cisaillement superficielle.
